(19) Europäisches Patentamt / European Patent Office / Office européen des brevets

(11) **EP 4 727 074 A1**

(12) **EUROPEAN PATENT APPLICATION**
published in accordance with Art. 153(4) EPC

(43) Date of publication:
**15.04.2026 Bulletin 2026/16**

(21) Application number: **24818344.4**

(22) Date of filing: **28.03.2024**

(51) International Patent Classification (IPC):
*H04L 27/26* (2006.01)

(52) Cooperative Patent Classification (CPC):
**H04L 5/00; H04L 27/26; H04W 72/0453**

(86) International application number:
**PCT/CN2024/084350**

(87) International publication number:
**WO 2024/250807 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.06.2023 CN 202310665412**

(71) Applicant: **Datang Mobile Communications Equipment Co., Ltd.**
**Beijing 100085 (CN)**

(72) Inventor: **WANG, Junwei**
**Beijing 100085 (CN)**

(74) Representative: **dompatent**
**Partnerschaft von Patentanwälten und Rechtsanwälten mbB**
**Deichmannhaus am Dom**
**Bahnhofsvorplatz 1**
**50667 Köln (DE)**

(54) **INFORMATION PROCESSING METHOD AND APPARATUS, TERMINAL, AND NETWORK DEVICE**

(57)    The present disclosure relates to the technical field of communications, and provides an information processing method and device, a user equipment, and a network device. The method includes: receiving, by UE, a first message transmitted by a network device; wherein the first message carries a first SCS and/or resource indication information of a sensing signal; determining, by the UE, a CP length in time and/or data length for transmitting the sensing signal according to the first SCS and/or the resource indication information.

receiving, by UE, a first message transmitted by a network device; where the first message carries a first SCS and/or resource indication information of a sensing signal — 61

determining, by the UE, a CP time domain length and/or data length for transmitting the sensing signal according to the first SCS and/or the resource indication information — 62

FIG. 6

## Description

The present application is filed based on and claims the priority of Chinese Application No. 202310665412.6 filed on June 6, 2023, entitled "information processing method and device, user equipment and network device", the disclosure of which are incorporated in their entireties by reference herein.

## TECHNICAL FIELD

The present disclosure relates to the field of communication technology, and in particular to an information processing method and device, user equipment and network device.

## BACKGROUND

In the evolution of communication technology, integrated sensing and communication (ISAC) is an important candidate evolution feature. In the sensing process, a transmission device can actively transmit a sensing signal and perform environmental sensing based on an echo signal, or the transmission device can perform environmental sensing based on a received sensing signal or an echo signal. At present, communication signals are transmitted and received based on orthogonal frequency division multiplex (OFDM) symbols. In the OFDM system, in order to reduce mutual interference of multipath signals, the technique of cyclic prefix (CP) has been introduced, that is, after data undergoes inverse fast Fourier transform (IFFT), tail information of the data is intercepted and placed in front of the data to avoid the interference of multipath signals. The longer the time-domain length of the CP, the longer the multipath delay difference that can be accommodated. When the sensing signal is also transmitted and received based on OFDM symbols, according to current different subcarrier spacing (SCS) and CP length in time, the interference-free distance range of the reflected signal is shown in the following Table 1.

Table 1

| $\mu$ | SCS | CP length in time (us) | monitoring range (meter) |
|---|---|---|---|
| 0 | 15kHz | 4.68 | 0~703 |
| 1 | 30kHz | 2.34 | 0~351 |
| 2 | 60kHz | 1.17 | 0~175 |
| 3 | 120kHz | 0.59 | 0~87 |
| 4 | 240kHz | 0.29 | 0~44 |
| 5 | 480kHz | 0.15 | 0~22 |
| 6 | 960kHz | 0.07 | 0~11 |

Where $\mu$ is a subcarrier spacing configuration parameter.

When a sensing signal is transmitted or received based on the current SCS and CP length in time, a maximum distance difference between different sensed objects and the transmission device within a sensing interval needs to be less than 703 meters, which cannot meet the needs of the sensing service.

## SUMMARY

The present disclosure provides an information processing method and device, user equipment and network device, which can solve the problem that the CP length in time cannot meet the needs of the sensing service when the sensing signal is transmitted based on the current OFDM symbol.

One embodiment of the present application provides an information processing method, including:

receiving, by a user equipment (UE), a first message transmitted by a network device; wherein the first message carries a first SCS and/or resource indication information of a sensing signal;
determining, by the UE, a CP length in time and/or data length for transmitting the sensing signal according to the first SCS and/or the resource indication information.

In some embodiments, the resource indication information is used to indicate at least one of the following:

an OFDM symbol for transmitting the sensing signal includes at least first OFDM symbol of a half subframe;
a second SCS for determining the CP length in time and/or data length of the sensing signal;
the number N of OFDM symbols used to determine the CP length in time and/or data length of the sensing signal;
where N is a positive integer;
a CP type of the OFDM symbol for transmitting the sensing signal is ECP.

In some embodiments, the resource indication information is used to indicate that the CP length in time of the sensing signal is a sum of the first CP length in time and the second CP length in time;
and/or,

the resource indication information is used to indicate that the data length of the sensing signal is a data length determined according to the first SCS;
wherein the first CP length in time is a CP length in time determined according to the first SCS, the second CP length in time is 16k, and k is a constant.

In some embodiments, the resource indication information is used to indicate that the data length of the sensing signal is a data length determined according to the second SCS;
and/or,

the resource indication information is used to indicate that the CP length in time of the sensing signal is determined by the following formula:

$$U_{CP3} = U_{OFDM} - N_u^{scs2} - U_{CP4},$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

In some embodiments, the second SCS is X/Y times the first SCS, where X and Y are integers and X>Y.
In some embodiments, the resource indication information is used to indicate that the CP length in time of the sensing signal is a CP length in time determined according to the second SCS;
and/or,
the resource indication information is used to indicate that the data length of the sensing signal is a data length determined according to the second SCS.
In some embodiments, the second SCS is X/Y times the first SCS, where X and Y are integers and X<Y.
In some embodiments, the resource indication information is used to indicate that the data length of the sensing signal is a data length determined according to the first SCS;
and/or,

the resource indication information is used to indicate that the CP length in time of the sensing signal is determined by the following formula:

$$U_{CP3} = N * U_{OFDM} - N_u^{scs1} - U_{CP4}$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

In some embodiments, $U_{CP4}$ is configured by a network device or agreed upon by a protocol.
In some embodiments, the resource indication information is used to indicate that the CP length in time of the sensing signal is an ECP length in time determined according to the first SCS;

and/or,

the resource indication information is used to indicate that the data length of the sensing signal is a data length determined according to the first SCS.

In some embodiments, the determining, by the UE, a CP length in time and/or data length for transmitting the sensing signal according to the first SCS and/or the resource indication information, includes:

> determining, by the UE, that the CP length in time of the sensing signal is a sum of a first CP length in time and a second CP length in time;
> and/or,
> determining, by the UE, that the data length of the sensing signal is a data length determined according to the first SCS;
> wherein the first CP length in time is a CP length in time determined according to the first SCS, the second CP length in time is 16k, and k is a constant.

In some embodiments, the determining, by the UE, a CP length in time and/or data length for transmitting the sensing signal according to the first SCS and/or the resource indication information, includes:

> determining, by the UE, that the data length of the sensing signal is a data length determined according to the second SCS;
> and/or,
> determining, by the UE, a CP length in time of the sensing signal by the formula:

$$U_{CP3} = U_{OFDM} - N_u^{scs2} - U_{CP4};$$

wherein $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

In some embodiments, the determining, by the UE, a CP length in time and/or data length for transmitting the sensing signal according to the first SCS and/or the resource indication information, includes:

> determining, by the UE, that the CP length in time of the sensing signal is a CP length in time determined according to the second SCS;
> and/or,
> determining, by the UE, that the data length of the sensing signal is a data length determined according to the second SCS.

In some embodiments, the determining, by the UE, a CP length in time and/or data length for transmitting the sensing signal according to the first SCS and/or the resource indication information, includes:

> determining, by the UE, that the data length of the sensing signal is a data length determined according to the first SCS;
> and/or,
> determining, by the UE, a CP length in time of the sensing signal by the formula:

$$U_{CP3} = N * U_{OFDM} - N_u^{scs1} - U_{CP4}$$

wherein $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

In some embodiments, the determining, by the UE, a CP length in time and/or data length for transmitting the sensing signal according to the first SCS and/or the resource indication information, includes:

determining, by the UE, that the CP length in time of the sensing signal is an ECP length in time determined according to the first SCS;

and/or,

determining, by the UE, that the data length of the sensing signal is a data length determined according to the first SCS.

In some embodiments, the CP length in time of the sensing signal is smaller than the data length of the sensing signal.

One embodiment of the present disclosure further provides an information processing method, including: transmitting, by a network device, a first message to a user equipment (UE); wherein the first message carries a first SCS and/or resource indication information of a sensing signal, and the first SCS and/or the resource indication information are used to determine a CP length in time and/or data length for transmitting the sensing signal.

In some embodiments, the resource indication information is used to indicate at least one of the following:

an OFDM symbol for transmitting the sensing signal includes at least first OFDM symbol of a half subframe;

a second SCS for determining the CP length in time and/or data length of the sensing signal;

the number N of OFDM symbols used to determine the CP length in time and/or data length of the sensing signal; where N is a positive integer;

a CP type of the OFDM symbol for transmitting the sensing signal is ECP.

In some embodiments, the resource indication information is used to indicate that the CP length in time of the sensing signal is a sum of a first CP length in time and a second CP length in time;

and/or,

the resource indication information is used to indicate that the data length of the sensing signal is a data length determined according to the first SCS;

wherein the first CP length in time is a CP length in time determined according to the first SCS, the second CP length in time is 16k, and k is a constant.

In some embodiments, the resource indication information is used to indicate that the data length of the sensing signal is a data length determined according to the second SCS;

and/or,

the resource indication information is used to indicate that the CP length in time of the sensing signal is determined by the following formula:

$$U_{CP3} = U_{OFDM} - N_u^{scs2} - U_{CP4}$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

In some embodiments, the second SCS is X/Y times the first SCS, where X and Y are integers and X>Y.

In some embodiments, the resource indication information is used to indicate that the CP length in time of the sensing signal is a CP length in time determined according to the second SCS;

and/or,

the resource indication information is used to indicate that the data length of the sensing signal is a data length determined according to the second SCS.

In some embodiments, the second SCS is X/Y times the first SCS, where X and Y are integers and X<Y.

In some embodiments, the resource indication information is used to indicate that the data length of the sensing signal is a data length determined according to the first SCS;

and/or,

the resource indication information is used to indicate that the CP length in time of the sensing signal is determined by the following formula:

$$U_{CP3} = N * U_{OFDM} - N_u^{scs1} - U_{CP4}$$

wherein $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

In some embodiments, $U_{CP4}$ is configured by a network device or agreed upon by a protocol.

In some embodiments, the resource indication information is used to indicate that the CP length in time of the sensing signal is an ECP length in time determined according to the first SCS;
and/or,
the resource indication information is used to indicate that the data length of the sensing signal is a data length determined according to the first SCS.

In some embodiments, the CP length in time of the sensing signal is smaller than the data length of the sensing signal.

One embodiment of the present disclosure further provides an information processing device, including: a memory, a transceiver, and a processor;

wherein the memory is used to store a computer program; the transceiver is used to send and receive data under the control of the processor; the processor is used to read the computer program in the memory and perform the following operations:

receiving a first message transmitted by a network device; wherein the first message carries a first SCS and/or resource indication information of a sensing signal;

determining a CP length in time and/or data length for transmitting the sensing signal according to the first SCS and/or the resource indication information.

In some embodiments, the resource indication information is used to indicate at least one of the following:

an OFDM symbol for transmitting the sensing signal includes at least first OFDM symbol of a half subframe;
a second SCS for determining the CP length in time and/or data length of the sensing signal;
the number N of OFDM symbols used to determine the CP length in time and/or data length of the sensing signal; where N is a positive integer;
a CP type of the OFDM symbol for transmitting the sensing signal is ECP.

In some embodiments, the resource indication information is used to indicate that the CP length in time of the sensing signal is a sum of the first CP length in time and the second CP length in time;
and/or,

the resource indication information is used to indicate that the data length of the sensing signal is a data length determined according to the first SCS;
wherein the first CP length in time is a CP length in time determined according to the first SCS, the second CP length in time is 16k, and k is a constant.

In some embodiments, the resource indication information is used to indicate that the data length of the sensing signal is a data length determined according to the second SCS;
and/or,

the resource indication information is used to indicate that the CP length in time of the sensing signal is determined by the following formula:

$$U_{CP3} = U_{OFDM} - N_u^{scs2} - U_{CP4},$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a

data length of the sensing signal; $U_{CP4}$ is greater than or equal to zero.

In some embodiments, the second SCS is X/Y times the first SCS, where X and Y are integers and X>Y.

In some embodiments, the resource indication information is used to indicate that the CP length in time of the sensing signal is a CP length in time determined according to the second SCS;
and/or,
the resource indication information is used to indicate that the data length of the sensing signal is a data length determined according to the second SCS.

In some embodiments, the second SCS is X/Y times the first SCS, where X and Y are integers and X<Y.

In some embodiments, the resource indication information is used to indicate that the data length of the sensing signal is a data length determined according to the first SCS;
and/or,

the resource indication information is used to indicate that the CP length in time of the sensing signal is determined by the following formula:

$$U_{CP3} = N * U_{OFDM} - N_u^{scs1} - U_{CP4}$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

In some embodiments, $U_{CP4}$ is configured by a network device or agreed upon by a protocol.

In some embodiments, the resource indication information is used to indicate that the CP length in time of the sensing signal is an ECP length in time determined according to the first SCS;
and/or,
the resource indication information is used to indicate that the data length of the sensing signal is a data length determined according to the first SCS.

In some embodiments, the processor is used to read the computer program in the memory and perform the following operations:

determining that the CP length in time of the sensing signal is a sum of a first CP length in time and a second CP length in time;
and/or,
determining that the data length of the sensing signal is a data length determined according to the first SCS;
wherein the first CP length in time is a CP length in time determined according to the first SCS, the second CP length in time is 16k, and k is a constant.

In some embodiments, the processor is used to read the computer program in the memory and perform the following operations:

determining that the data length of the sensing signal is a data length determined according to the second SCS;
and/or,
determining a CP length in time of the sensing signal by the formula:

$$U_{CP3} = U_{OFDM} - N_u^{scs2} - U_{CP4};$$

wherein $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

In some embodiments, the processor is used to read the computer program in the memory and perform the following operations:

determining that the CP length in time of the sensing signal is a CP length in time determined according to the second SCS;
and/or,
determining that the data length of the sensing signal is a data length determined according to the second SCS.

In some embodiments, the processor is used to read the computer program in the memory and perform the following operations:

determining that the data length of the sensing signal is a data length determined according to the first SCS;
and/or,
determining a CP length in time of the sensing signal by the formula:

$$U_{CP3} = N * U_{OFDM} - N_u^{scs1} - U_{CP4}$$

wherein $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

In some embodiments, the processor is used to read the computer program in the memory and perform the following operations:

determining that the CP length in time of the sensing signal is an ECP length in time determined according to the first SCS;
and/or,
determining that the data length of the sensing signal is a data length determined according to the first SCS.

In some embodiments, the CP length in time of the sensing signal is smaller than the data length of the sensing signal.

One embodiment of the present disclosure further provides a user equipment (UE), including:

a receiving unit used to receive a first message transmitted by a network device; wherein the first message carries a first SCS and/or resource indication information of a sensing signal;
a processing unit used to determine a CP length in time and/or data length for transmitting the sensing signal according to the first SCS and/or the resource indication information.

One embodiment of the present disclosure further provides an information processing device, comprising: a memory, a transceiver, and a processor;

wherein the memory is used to store a computer program; the transceiver is used to send and receive data under the control of the processor; the processor is used to read the computer program in the memory and perform the following operations:
transmitting a first message to a user equipment (UE); wherein the first message carries a first SCS and/or resource indication information of a sensing signal, and the first SCS and/or the resource indication information are used to determine a CP length in time and/or data length for transmitting the sensing signal.

In some embodiments, the resource indication information is used to indicate at least one of the following:

an OFDM symbol for transmitting the sensing signal includes at least first OFDM symbol of a half subframe;
a second SCS for determining the CP length in time and/or data length of the sensing signal;
the number N of OFDM symbols used to determine the CP length in time and/or data length of the sensing signal; where N is a positive integer;
a CP type of the OFDM symbol for transmitting the sensing signal is ECP.

In some embodiments, the resource indication information is used to indicate that the CP length in time of the sensing signal is a sum of a first CP length in time and a second CP length in time;
and/or,

the resource indication information is used to indicate that the data length of the sensing signal is a data length determined according to the first SCS;
wherein the first CP length in time is a CP length in time determined according to the first SCS, the second CP length in time is 16k, and k is a constant.

In some embodiments, the resource indication information is used to indicate that the data length of the sensing signal is a data length determined according to the second SCS;
and/or,

the resource indication information is used to indicate that the CP length in time of the sensing signal is determined by the following formula:

$$U_{CP3} = U_{OFDM} - N_u^{scs2} - U_{CP4}$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

In some embodiments, the second SCS is X/Y times the first SCS, where X and Y are integers and X>Y.
In some embodiments, the resource indication information is used to indicate that the CP length in time of the sensing signal is a CP length in time determined according to the second SCS;
and/or,
the resource indication information is used to indicate that the data length of the sensing signal is a data length determined according to the second SCS.
In some embodiments, the second SCS is X/Y times the first SCS, where X and Y are integers and X<Y.
In some embodiments, the resource indication information is used to indicate that the data length of the sensing signal is a data length determined according to the first SCS;
and/or,

the resource indication information is used to indicate that the CP length in time of the sensing signal is determined by the following formula:

$$U_{CP3} = N * U_{OFDM} - N_u^{scs1} - U_{CP4}$$

wherein $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

In some embodiments, $U_{CP4}$ is configured by a network device or agreed upon by a protocol.
In some embodiments, the resource indication information is used to indicate that the CP length in time of the sensing signal is an ECP length in time determined according to the first SCS;
and/or,
the resource indication information is used to indicate that the data length of the sensing signal is a data length determined according to the first SCS.
In some embodiments, the CP length in time of the sensing signal is smaller than the data length of the sensing signal.
One embodiment of the present disclosure further provides a network device, including:

a transmission unit used to transmit a first message to a user equipment (UE); wherein the first message carries a first SCS and/or resource indication information of a sensing signal, and the first SCS and/or the resource indication information are used to determine a CP length in time and/or data length for transmitting the sensing signal.

One embodiment of the present disclosure further provides a processor-readable storage medium, including a computer program stored thereon; wherein the computer program is used to cause a processor to execute steps of the information processing method on the UE-side, or the computer program is used to cause the processor to execute steps of the information processing method on the network device side.

The beneficial effects of the above technical solution of the present disclosure are as follows:.

In the embodiments of the present disclosure, the UE receives the first message transmitted by the network device, and determines the CP length in time and/or data length for transmitting the sensing signal based on the first SCS and/or the resource indication information of the sensing signal carried in the first message, which is able to extend the CP length in time of the sensing signal to reduce inter-symbol interference, thereby meeting the needs of the sensing service and then solving the problem that the CP length in time cannot meet the needs of the sensing service when the sensing signal is transmitted based on the current OFDM symbol.

**BRIEF DESCRIPTION OF THE DRAWINGS**

FIG. 1a is a schematic diagram showing a base station-based monostatic sensing;

FIG. 1b is a schematic diagram showing UE-based monostatic sensing;

FIG. 1c is a schematic diagram showing UE-to-UE bistatic sensing;

FIG. 1d is a schematic diagram showing base station-to-base station bistatic sensing;

FIG. 1e is a schematic diagram showing UE-to-base station bistatic sensing;

FIG. 1f is a schematic diagram showing base-to-UE bistatic sensing;

FIG. 1g is a schematic diagram showing interactive sensing;

FIG. 2a is a schematic diagram showing a non-interference scenario;

FIG. 2b is a schematic diagram showing a scenario with interference;

FIG. 3 is a schematic diagram showing a situation where a subframe includes slots and symbols;

FIG. 4 is a schematic diagram showing an interference-free reflected signal;

FIG. 5 is a schematic diagram showing a detection step length based on CP;

FIG. 6 is a flowchart of an information processing method at a UE side according to an embodiment of the present disclosure;

FIG. 7 is a first schematic diagram of determining CP length in time and data length for a sensing signal according to an embodiment of the present disclosure;

FIG. 8 is a second schematic diagram of determining CP length in time and data length for a sensing signal according to an embodiment of the present disclosure;

FIG. 9 is a third schematic diagram of determining CP length in time and data length for a sensing signal according to an embodiment of the present disclosure;

FIG. 10 is a fourth schematic diagram of determining CP length in time and data length for a sensing signal according to an embodiment of the present disclosure;

FIG. 11 is a fifth schematic diagram of determining CP length in time and data length for a sensing signal according to an embodiment of the present disclosure;

FIG. 12 is a flowchart of an information processing method on a network device side according to an embodiment of the present disclosure;

FIG. 13a is a first schematic diagram of determining an OFDM symbol for transmitting a sensing signal according to an embodiment of the present disclosure;

FIG. 13b is a second schematic diagram of determining an OFDM symbol for transmitting a sensing signal according to an embodiment of the present disclosure;

FIG. 14 is a schematic diagram showing transmission of a sensing signal on two OFDM symbols according to an embodiment of the present disclosure;

FIG. 15 is a block diagram showing an information processing device on a UE side according to an embodiment of the present disclosure;

FIG. 16 is a block diagram of a UE according to an embodiment of the present disclosure;

FIG. 17 is a block diagram showing an information processing device on a network device side according to an embodiment of the present disclosure; and

FIG. 18 is a block diagram of a network device according to an embodiment of the present disclosure.

**DETAILED DESCRIPTION**

In order to make technical problems to be solved, technical solutions and advantages of the present disclosure clearer, the following will be described in detail in conjunction with the accompanying drawings and specific embodiments. In the following description, specific details such as configurations and components are provided solely for the purpose of facilitating a complete understanding of the embodiments of the present disclosure. Accordingly, those skilled in the art will recognize that various changes and modifications can be made to the embodiments described herein without departing from the scope and spirit of the present disclosure. Descriptions of well-known functions and constructions are omitted for clarity and conciseness.

It is to be understood that "in one embodiment" or "in an embodiment" throughout the specification mean that a particular feature, structure, or characteristic described in connection with the embodiment is included in at least one embodiment of the present disclosure. Thus, the appearances of "in one embodiment" or "in an embodiment" in various places throughout the specification are not necessarily all referring to the same embodiment. Further, the specific features, structures, or characteristics may be combined in any suitable manner in one or more embodiments.

In various embodiments of the present disclosure, it is to be understood that the numerical order of the following processes does not imply a sequence of execution. The order of execution should be determined by their inherent functionality and logic, and shall not be construed as limiting the implementation process of the embodiments herein.

Additionally, the terms "system" and "network" may be used interchangeably herein.

It is to be noted that "terminal" in the embodiments of the present disclosure broadly refers to a signal-receiving device. For example, the terminal may be a smart terminal, customer premise equipment (CPE), an onboard unit, a mobile phone, etc., and it may also refer to a roadside unit or a receiving equipment of a base station.

It is to be noted that the technical solutions in the embodiments of the present disclosure can be applied not only to transmission of sensing signals but also to signal transmission such as communication signals in other OFDM systems.

The technical solution of the embodiment of the present disclosure may be applied to various systems, especially a 5G system. For example, applicable systems may be Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, LTE frequency division duplex (FDD), LTE time division duplex (TDD) system, long term evolution advanced (LTE-A) system, universal mobile telecommunication system (UMTS), worldwide interoperability for microwave access (WiMAX) system, or 5th-Generation (5G) New Radio (NR) system, 6th Generation (6G). Each of these systems includes a terminal device and a network device. Each system further includes a core network part, e.g., an Evolved Packet System (EPS) or 5G system (5GS/5GC).

Each of the network device and the terminal can use one or more antennas for multi input multi output (MIMO) transmission between the network device and the terminal. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

In the embodiment of the present application, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

In the embodiment of the present application, the term "plurality" refers to two or more than two, and other quantifiers are similar.

The technical solutions in the embodiments of the present disclosure will be clearly and completely described below with reference to the accompanying drawings in the embodiments of the present disclosure. Obviously, the described embodiments are only some embodiments of the present disclosure, rather than all embodiments. Based on the embodiments in the present disclosure, all other embodiments obtained by those of ordinary skill in the art without creative efforts fall within the scope of protection of the present disclosure.

An introduction to the related technologies associated with the present disclosure is provided below.

1. Basic concepts of ISAC

The basic idea of ISAC is to integrate wireless sensing capabilities into mobile communication systems. Wireless sensing refers to the use of wireless signals to sense environmental information, and the environmental information includes but not limited to: distribution, size, quantity and temperature of objects in the environment, human actions and behaviors, and even human respiration rate and heart rate. The principle of wireless sensing involves transmitting wireless signals into the environment to be sensed and simultaneously collecting, at a receiving end. signals that have been reflected, scattered, or transmitted via multiple paths through the environment. Since the collected wireless signals interact with the environment, i.e., the collected wireless signals carry environmental information, after receiving the wireless signals reflected, scattered or multi-path transmitted by the environment, environmental characteristics can be obtained after corresponding signal processing. This allows for reconstruction of sensed environmental information, such as identifying persons and objects in the environment, detecting temperature, detecting human movements, and even breathing frequency, heart rate, etc.

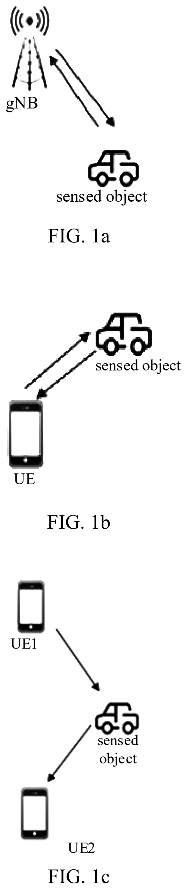

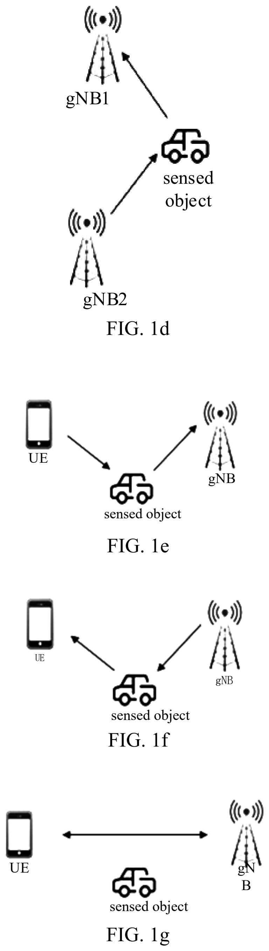

Wireless sensing is usually divided into: monostatic sensing and bistatic sensing. The monostatic sensing refers to that a base station or UE actively transmits a sensing signal, and the sensing signal is reflected by a sensed object and then received by the base station or UE. For example, the monostatic sensing can include base station-based monostatic sensing (as shown in FIG. 1a) and UE-based monostatic sensing (as shown in FIG. 1b). The bistatic sensing refers to that a base station or UE actively transmits a sensing signal, and the sensing signal is received by a peer UE or base station through a wireless channel. For example, the bistatic sensing can include UE-to-UE bistatic sensing (i.e., UE-UE bistatic sensing, as shown in FIG. 1c), base station-to-base station bistatic sensing (i.e., gNB-gNB bistatic sensing, as shown in FIG. 1d), UE-to-base station bistatic sensing (i.e., UE-gNB bistatic sensing, as shown in FIG. 1e), and base station-to-UE bistatic sensing (i.e., gNB-UE bistatic sensing, as shown in FIG. 1f). In addition, the wireless sensing can also include interactive sensing, such as a UE or base station actively transmitting a sensing signal, and the sensing signal is received by the base station or UE without passing through a sensed object, as shown in FIG. 1g.

2. OFDM symbol and CP

The main idea of OFDM is to divide a channel into several orthogonal sub-channels, convert high-speed data signal into parallel low-speed sub-data streams, which is each modulated onto each sub-channel for transmission. Orthogonal signals can be separated by using correlation technology at the receiving end, which can reduce inter-symbol interference (ISI) of the sub-channels. The signal bandwidth of each sub-channel is narrower than the corresponding bandwidth of the channel, so each sub-channel can be regarded as flat fading, thereby eliminating inter-symbol interference. Further, since the bandwidth of each sub-channel is only a small part of the original channel bandwidth, channel equalization becomes relatively easy.

In order to eliminate the inter-symbol interference caused by multipath, a cyclic prefix is filled in a guard interval of the OFDM symbols to ensure that the number of waveform cycles of the delayed multipath signal of the OFDM symbol within the Fast Fourier Transform (FFT) period is also an integer. In this way, the signal with a delay less than the guard interval can avoid inter-symbol interference during the demodulation process.

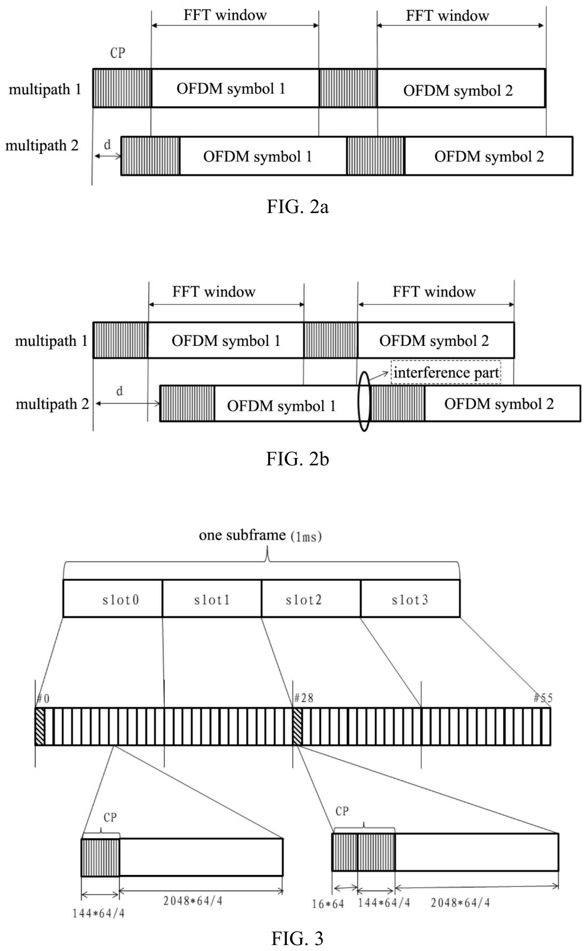

As shown in FIG. 2a, this is an interference-free scenario. The time delay d between multipath 2 and multipath 1 is less than the CP length in time. When performing FFT transformation, since multipath 2 is within the FFT receiving window, there can still be a complete periodic signal. Therefore, both multipath signals can restore the original information, and the symbol 1 does not interfere with the symbol 2.

As shown in FIG. 2b, this is a scenario with interference. The delay d between multipath 2 and multipath 1 is greater than the CP length in time. When performing FFT transformation, since multipath 2 is within the FFT receiving window, it cannot form a complete periodic signal, thus multipath 2 cannot completely restore the original information. At the same time, the symbol 1 of multipath 2 interferes with the symbol 1 of multipath 1.

3. Frame structure parameter

Some parameters are defined in NR technology, which are explained hereinafter.

Sampling rate Tc: $T_c = 1/(\Delta f_{max} \cdot N_f)$, that is, a sampling rate when the UE or base station receives signals, where $\Delta f_{max} = 480 \cdot 10^3$, $N_f$ is 4096.

Constant k: k=Ts/Tc=64; where $T_s = 1/(\Delta f_{ref} \cdot N_{f,ref})$, $\Delta f_{ref} = 15 \cdot 10^3 Hz$, $N_{f,ref}$=2048.

SCS and CP are shown in the following Table 2.

Table 2

| μ | SCS (kHz) | CP type | note |
|---|---|---|---|
| 0 | 15 | NCP | supported |
| 1 | 30 | NCP | supported |
| 2 | 60 | NCP, ECP | supported |
| 3 | 120 | NCP | supported |
| 4 | 240 | NCP | not supported on data channel |
| 5 | 480 | NCP | supported |

(continued)

| μ | SCS (kHz) | CP type | note |
|---|---|---|---|
| 6 | 960 | NCP | supported |

The length in time of a radio frame is 10ms, including 10 sub-frames. The length in time of each sub-frame is 1ms. Each sub-frame includes several slots (including different number of slots depending on different SCSs), and each slot contains 14 symbols, as shown in the following Table 3.

Table 3

| μ | number of symbols per slot | number of slots per radio Frame | number of slots per subframe |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 3 above illustrates the number of slots included in a 10ms radio frame and the number of slots included in each subframe under different SCS conditions. For example, when μ=4, each subframe includes 16 slots, each slot includes 14 symbols, that is, each subframe includes 16*14=224 symbols. The data length and CP length in time included in the OFDM symbol under different SCS conditions are different. The relevant data length and CP length in time are determined by the following formula:

The data length $N_{\mathrm{u}}^{\mu}$ is: $N_{\mathrm{u}}^{\mu} = 2048k \cdot 2^{-\mu}$

The CP length in time $N_{\mathrm{CP},l}^{\mu}$ is:

$$N_{\mathrm{CP},l}^{\mu} = \begin{cases} 512k \cdot 2^{-\mu} & \mathrm{ECP} \\ 144k \cdot 2^{-\mu} + 16k & \mathrm{NCP},\ l = 0 \ \mathrm{or}\ l = 7 \cdot 2^{\mu} \\ 144k \cdot 2^{-\mu} & \mathrm{NCP},\ l \neq 0 \ \mathrm{and}\ l \neq 7 \cdot 2^{\mu} \end{cases}$$

where μ is a subcarrier configuration parameter, as shown in Table 1, Table 2 or Table 3 above; *l* is the number of symbols.

As shown in FIG. 3, it shows slots and symbols included in a subframe when SCS=60 kHz.

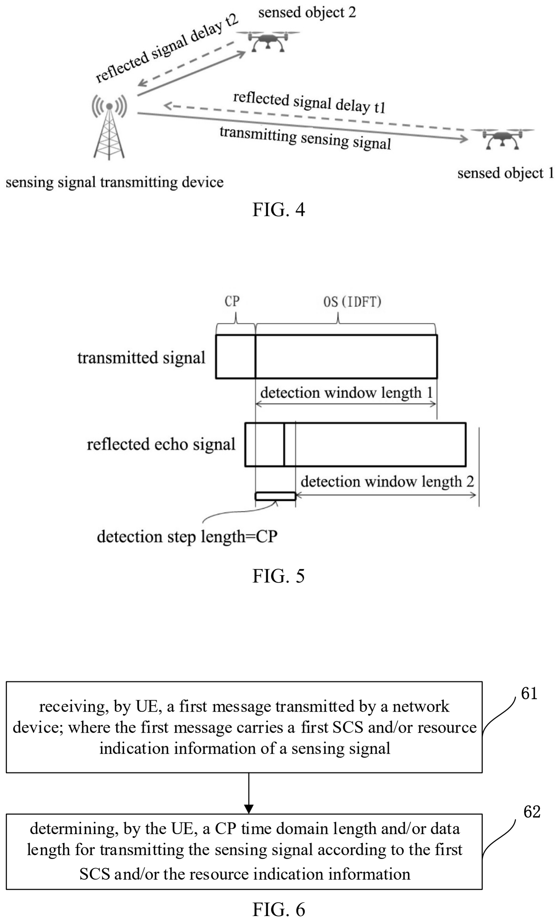

On the one hand, in order to reduce multipath interference of reflected sensing signals, a longer CP is required. As shown in FIG. 4, when a transmission device transmits a sensing signal, if there are two sensed objects, a delay difference of reflected signals of each sensing object should not be greater than the CP length in time, otherwise it will cause mutual interference. Continuing to refer to Table 1, for example, when the sensing signal uses SCS=120kHz, the CP length in time is 0.59 microseconds, and a distance difference between the two objects cannot be greater than 87 meters.

On the other hand, a longer CP is required to enhance search compensation and accelerate recognition of sensed objects. Detection methods based on autocorrelation sequences exhibit low performance accuracy; while detection methods using signal phase demonstrate high detection accuracy. For detection of sensing signals, phase-based detection methods (such as subcarrier signal phase detection) can be employed. As shown in FIG. 5, a detection position is a starting position of transmitting OS; a minimum detection distance is 0 meters (such as centimeters). Specifically, the sensing signal is transmitted by using CP+IFFT symbols.

The sliding window-based detection method includes:

a detection window length is IFFT symbol length, within which a subcarrier phase signal is detected;

a sliding window search step size: CP length in time (the longer the CP, the simpler the complexity of the detection algorithm).

Therefore, to accelerate the detection speed, this can be achieved by increasing the time-domain length of the CP.

The embodiments of the present disclosure provide an information processing method and device, user equipment and network device, which can solve the problem that the CP length in time cannot meet the needs of the sensing service when the sensing signal is transmitted based on the current OFDM symbol. The method and the device (or user equipment or network device) are based on the same application concept. Since the principles of solving the problem by the method and the device (or user equipment or network device) are similar, the implementation of the method and the device (or user equipment or network device) can refer to each other, and the repeated parts will not be repeated.

As shown in FIG. 6, one embodiment of the present disclosure provides an information processing method, including the following steps:

Step 61: receiving, by a user equipment (UE), a first message transmitted by a network device; where the first message carries a first SCS and/or resource indication information of a sensing signal.

In some embodiments, the first message may be a radio resource control (RRC) or a downlink control information (DCI), that is, the first SCS and/or the resource indication information may be configured by the network device through an RRC message, or may be dynamically indicated by the network device through DCI.

In some embodiments, the first SCS and the resource indication information may be carried in the same message (for example, carried in an RRC message or a DCI), or may be carried in two different messages (for example, one carried in an RRC message and the other carried in a DCI), etc. Carrying the first SCS in the first message may include indicating a subcarrier spacing configuration parameter $\mu$ in the first message, or explicitly or implicitly indicating the first SCS in other ways, etc. Carrying the resource indication information in the first message may also be indicated in an explicit or implicit manner, or may be based on a resource set or resource pool indication, or based on a semi-static periodic configuration, or based on a dynamic indication, etc., which are not limited in the embodiments of the present disclosure.

Step 62: determining, by the UE, a CP length in time and/or data length for transmitting the sensing signal according to the first SCS and/or the resource indication information.

In some embodiments, the CP length in time of the sensing signal is less than the data length of the sensing signal, and the CP length in time of the sensing signal is greater than or equal to a sum of a first CP length in time and a second CP length in time. The first CP length in time is a CP length in time determined according to the first SCS, and the second CP length in time is 16k, and k is a constant, such as k=64. That is, the CP length in time of the sensing signal is greater than or equal to a normal cyclic prefix (NCP) length in time determined according to the first SCS.

In this embodiment, the UE receives the first message transmitted by the network device, and determines the CP length in time and/or data length for transmitting the sensing signal based on the first SCS and/or the resource indication information of the sensing signal carried in the first message, which is able to extend the CP length in time of the sensing signal to reduce inter-symbol interference, thereby meeting the needs of the sensing service and then solving the problem that the CP length in time cannot meet the needs of the sensing service when the sensing signal is transmitted based on the current OFDM symbol.

In some embodiments, the resource indication information is used to determine the CP length in time and/or data length for transmitting a sensing signal; correspondingly, the resource indication information can also be used to determine the CP length in time and/or data length for receiving a sensing signal. The two methods are similar. The following describes determining the CP length in time and/or data length for transmitting a sensing signal.

In some embodiments, the resource indication information is used to indicate at least one of the following:

an OFDM symbol for transmitting the sensing signal includes at least first OFDM symbol of a half subframe; for example, the resource indication information can be used to indicate that a sensing symbol (i.e., a symbol for transmitting the sensing signal) is scheduled on a first OFDM symbol of 0.5 ms (i.e., half subframe) of the system timing; in this way, since the CP length in time of the first OFDM symbol of the half subframe is: $144k \cdot 2^{-\mu} + 16k$, so that the CP length in time of the sensing signal can be extended to meet the needs of the sensing service;

a second SCS for determining the CP length in time and/or data length of the sensing signal; for example, the second SCS and the first SCS are two different configuration parameters; or it is understood that the second SCS is greater than the first SCS, or the second SCS is less than the first SCS; or it is understood that the second SCS is X/Y times the first SCS, X and Y are integers, X>Y or X<Y, etc; for example, when the resource indication information is used to indicate the second SCS, it may be an indication of an explicit indication of the second SCS, or an indication of a subcarrier spacing configuration parameter $\mu$ (for example, the second SCS belongs to an SCS corresponding to a certain $\mu$ shown in above Table 2), or an indication of X/Y, or an indication of the size relationship between the second SCS and the first SCS (for example, the second SCS is greater than the first SCS, or the second SCS is less than the first SCS), or an indication of determining the second SCS by the UE based on an agreed rule, etc., which are not limited in the embodiments of the present disclosure;

the number N of OFDM symbols used to determine the CP length in time and/or data length of the sensing signal; where N is a positive integer; for example, when the SCS remains unchanged (i.e., the data length of the sensing signal is determined based on the first SCS), one sensing symbol for transmitting the sensing signal may occupy N OFDM symbols, so that when the data length of the sensing signal is determined based on the first SCS, the CP length in time of the sensing signal may be extended, thereby meeting the needs of the sensing service;

a CP type of the OFDM symbol for transmitting the sensing signal is ECP; for example, an integer multiple of 0.5 ms (i.e., half subframe) is used as a time unit to determine a resource allocation mode of the sensing symbol (i.e., determining the sensing symbol for transmitting the sensing signal within a time unit of N*0.5 ms), and the CP type of each symbol within the time unit is ECP, i.e., the CP length in time is: $512k \cdot 2^{-\mu}$, thereby extending the CP length in time of the sensing signal to meet the needs of the sensing service.

In some embodiments, the resource indication information is used to indicate that the CP length in time of the sensing signal is a sum of the first CP length in time and the second CP length in time;
and/or,

the resource indication information is used to indicate that the data length of the sensing signal is a data length determined according to the first SCS;
where the first CP length in time is a CP length in time determined according to the first SCS, the second CP length in time is 16k, and k is a constant, for example: k=64.

For example, in case that the resource indication information is used to indicate that the OFDM symbol for transmitting the sensing signal includes at least the first OFDM symbol of the half subframe, or the resource indication information is used to indicate that the CP length in time of the sensing signal is the sum of the first CP length in time and the second CP length in time, and/or, the resource indication information is used to indicate that the data length of the sensing signal is the data length determined according to the first SCS,
in some embodiments, the determining, by the UE, a CP length in time and/or a data length for transmitting the sensing signal according to the first SCS and/or the resource indication information, includes:

determining, by the UE, that the CP length in time of the sensing signal is the sum of the first CP length in time and the second CP length in time;
and/or,
determining, by the UE, that the data length of the sensing signal is the data length determined according to the first SCS;
where the first CP length in time is the CP length in time determined according to the first SCS, and the second CP length in time is 16k, and k is a constant.

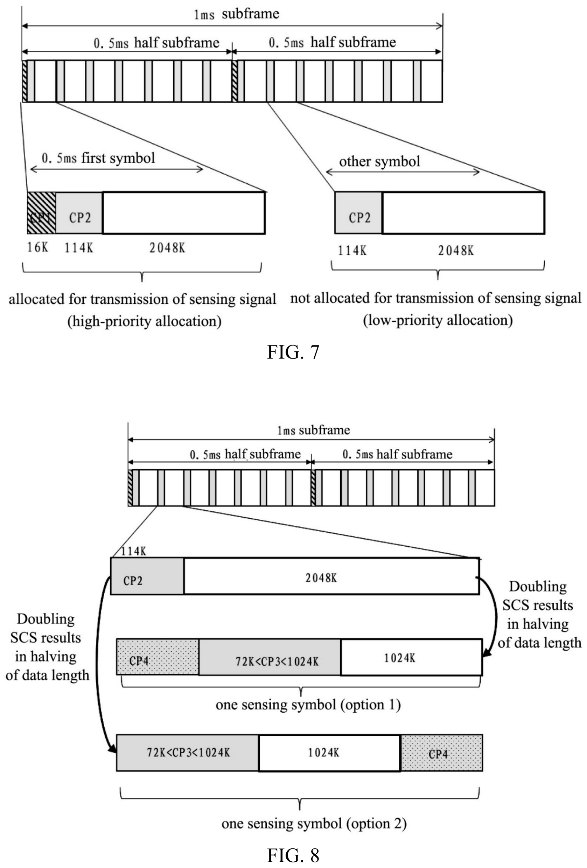

For example, the CP length in time of special sample points in symbol 0 and symbol $7 \cdot 2^{\mu}$ in a radio frame is: $144k \cdot 2^{-\mu} + 16k$ (where 16k is about 0.52 microseconds in duration). When the network device indicates that the SCS of the sensing signal is the same as the SCS of the communication signal (that is, the network device indicates that the SCS of the sensing signal and the SCS of the communication signal are both the first SCS, for example, the SCS of the sensing signal is the same as SCS of physical downlink control channel (PDCCH) or physical downlink shared channel (PDSCH) signal), the sensing signal is allocated to symbol 0 and/or symbol $7 \cdot 2^{\mu}$ in the radio frame (that is, the first OFDM symbol of the half subframe), which can effectively extend the CP length in time of the sensing symbol. As shown in FIG. 7, in a 1ms subframe, the first OFDM symbol at the beginning of the subframe and the OFDM symbol at 0.5ms have a 16k CP sample point, and the effective length is increased by 16k relative to the CP of other symbols. The resource indication information is used to indicate transmission of the sensing signal on the first OFDM symbol and/or the OFDM symbol at 0.5 ms, while no sensing signal is transmitted on other OFDM symbols (for example, other symbols can be used to transmit communication signals, etc.).

In this embodiment, when the resource indication information is used to indicate that the OFDM symbol for transmitting the sensing signal includes at least the first OFDM symbol of a half subframe, the UE can determine the sum of the first CP length in time and the second CP length in time as the CP length in time of the sensing signal, and/or determine the data length determined according to the first SCS as the data length of the sensing signal, and transmit data part of the sensing signal on the data length, and send a cyclic prefix of the data part on the CP length in time.

In some embodiments, in case that the resource indication information is used to indicate that the OFDM symbol for transmitting the sensing signal includes at least the first OFDM symbol of a half subframe, the resource indication information includes but is not limited to at least one of the following:

a first bitmap indicating that the OFDM symbol for transmitting the sensing signal includes at least a first OFDM symbol of a half subframe in a first resource set or a first resource pool; for example, the first bitmap indicates that the first OFDM symbol of one or more half subframes in the first resource set or the first resource pool is used to transmit the sensing signal, while no sensing signal is transmitted on other OFDM symbols;

or,

a periodic configuration parameter indicating that the OFDM symbol for transmitting the sensing signal includes at least a first OFDM symbol of a half subframe in each period; for example, the periodic configuration parameter indicates that the period is an integer multiple of 0.5 ms (i.e., an integer multiple of the half subframe), an offset is an integer multiple of 0.5 ms (i.e., an integer multiple of the half subframe), and each period includes one OFDM symbol, etc., to ensure that the OFDM symbol for transmitting the sensing signal includes at least the first OFDM symbol of the half subframe;

or,

a dynamic configuration parameter indicating at least one of the following:

whether the OFDM symbol for transmitting the sensing signal includes only the first OFDM symbol of the half subframe;

a time gap between a starting position of the OFDM symbol for transmitting the sensing signal and a receiving position of the dynamic configuration parameter;

a starting position of the OFDM symbol for transmitting the sensing signal;

an end position of the OFDM symbol for transmitting the sensing signal;

the number P of OFDM symbols for transmitting the sensing signal.

For example, when the dynamic configuration parameter indicates that the OFDM symbol for transmitting the sensing signal only includes the first OFDM symbol of the half subframe, starting from the starting position of the OFDM symbol for transmitting the sensing signal to the ending position of the OFDM symbol for transmitting the sensing signal, only the first OFDM symbol of the half subframe is determined as the OFDM symbol for transmitting the sensing signal; or, starting from the starting position of the OFDM symbol for transmitting the sensing signal, the first OFDM symbols of P half subframes are determined as the OFDM symbol for transmitting the sensing signal. When the dynamic configuration parameter indicates that the OFDM symbol for transmitting the sensing signal does not only include the first OFDM symbol of the half subframe, all OFDM symbols from the starting position of the OFDM symbol for transmitting the sensing signal to the ending position of the OFDM symbol for transmitting the sensing signal are determined as the OFDM symbol for transmitting the sensing signal; or, starting from the starting position of the OFDM symbol for transmitting the sensing signal, P OFDM symbols are determined as the OFDM symbol for transmitting the sensing signal.

In some embodiments, before receiving, by the UE, the first message transmitted by the network device, the method further includes:

transmitting, by the UE, first indication information to the network device; where the first indication information is used to indicate whether to request for configuring the OFDM symbol for transmitting the sensing signal to include only the first OFDM symbol of a half subframe.

For example, the UE requests the network device to configure the OFDM symbol for transmitting the sensing signal to include only the first OFDM symbol of the half subframe, then the resource indication information transmitted by the network device to the UE is used to indicate that the OFDM symbol for transmitting the sensing signal includes only the first OFDM symbol of the half subframe.

In some embodiments, the resource indication information is used to indicate that the data length of the sensing signal is a data length determined according to the second SCS;

and/or,

the resource indication information is used to indicate that the CP length in time of the sensing signal is determined by the following formula:

$$U_{CP3} = U_{OFDM} - N_u^{scs2} - U_{CP4};$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

For example, in case that the resource indication information is used to indicate a second SCS used to determine the CP length in time and/or data length of the sensing signal, and the second SCS is X/Y times the first SCS, X and Y are integers, and X>Y; or, the resource indication information is used to indicate that the data length of the sensing signal is a data length determined according to the second SCS; and/or, the resource indication information is used to indicate that the CP length in time of the sensing signal is determined by the following formula:

$$U_{CP3} = U_{OFDM} - N_u^{scs2} - U_{CP4},$$

in some embodiments, the determining, by the UE, a CP length in time and/or a data length for transmitting the sensing signal according to the first SCS and/or the resource indication information, includes:

determining, by the UE, that the data length of the sensing signal is a data length determined according to the second SCS;
and/or,
determining, by the UE, the CP length in time of the sensing signal through the formula:

$$U_{CP3} = U_{OFDM} - N_u^{scs2} - U_{CP4}$$

where $U_{CP3}$ is a CP length in time of the sensing signal; ; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

In some embodiments, $U_{CP1} < U_{CP3} < N_u^{scs2}$. For example, $U_{CP3}$ can be indicated by the network device or agreed upon by the protocol, and $U_{CP3}$ satisfies the relationship: $U_{CP3} = U_{OFDM} - N_u^{scs2} - U_{CP4}$.

In some embodiments, $U_{CP4}$ is configured by a network device or agreed upon by a protocol, and $U_{CP3}$ can be determined by the formula: $U_{CP3} = U_{OFDM} - N_u^{scs2} - U_{CP4}$, and $U_{CP1} < U_{CP3} < N_u^{scs2}$.

In some embodiments, the second SCS is X/Y times the first SCS, where X and Y are integers and X>Y.

For example, taking the second SCS as twice the first SCS as an example, in order to avoid ambiguity in the detection of the sensing signal, the CP length in time of the sensing signal should not exceed the data length of the sensing signal. When the sensing signal is transmitted on an OFDM symbol determined according to the first SCS, in order to ensure that the transmitted sensing signal has a longer CP, as shown in FIG. 8, the CP length in time and/or data length of the sensing signal is determined on an OFDM symbol length $U_{OFDM}$ = 144$k$·2$^{-\mu}$ + 2048$k$·2$^{-\mu}$ determined according to the first SCS as follows (take $\mu$=0 corresponding to the first SCS as an example):

the data length of the sensing signal is reduced to half of the original length (e.g., reduced from 2048k to 1024k);
the CP length in time of the sensing signal is smaller than the data length of the sensing signal (such as the CP3 part in FIG. 8).

It is to be noted that when the OFDM symbol length $U_{OFDM}$=144$k$·2$^{-\mu}$ +16$k$ + 2048$k$·2$^{-\mu}$ determined according to the first SCS, the method of determining the data length and the CP length in time of the sensing signal is similar to the above method, and values of the corresponding $U_{CP4}$ of the two may not be equal.

In this embodiment, when the resource indication information is used to indicate a second SCS for determining the CP length in time and/or data length of the sensing signal, and the second SCS is X/Y times the first SCS, X and Y are integers, and X>Y, the UE can determine the data length determined according to the second SCS as the data length of the sensing signal, and/or determine a value of the $U_{CP3}$ determined by the formula $U_{CP3} = U_{OFDM} - N_u^{scs2} - U_{CP4}$ as the CP length in time of the sensing signal, and transmit the data part of the sensing signal on the data length, and transmit the cyclic prefix of the data part on the CP length in time.

In some embodiments, a time domain portion corresponding to $U_{CP4}$ (the CP4 portion as shown in FIG. 8) may not transmit any data (i.e., content of this portion is empty), or may transmit a random number, etc., which are not limited in the embodiments of the present disclosure. It is to be noted here that a starting position of the CP4 portion may be at the starting position of an OFDM symbol determined according to the first SCS (as shown in option 1 in FIG. 8); or, an ending position of the CP4 portion may be at an ending position of an OFDM symbol determined according to the first SCS (as shown in option 2 in FIG. 8); or, the CP4 portion includes two parts: a starting position of one part is at a starting position of an OFDM symbol determined according to the first SCS, and an ending position of the other part is at an ending position of an OFDM symbol determined by the first SCS, etc., which are not limited in the embodiments of the present disclosure.

In some embodiments, the resource indication information is used to indicate that the CP length in time of the sensing signal is a CP length in time determined according to the second SCS;
and/or,
the resource indication information is used to indicate that the data length of the sensing signal is a data length determined according to the second SCS.

For example, in case that the resource indication information is used to indicate a second SCS used to determine the CP length in time and/or data length of the sensing signal, and the second SCS is X/Y times the first SCS, X and Y are integers, and X<Y; or, the resource indication information is used to indicate that the CP length in time of the sensing signal is a CP length in time determined according to the second SCS; and/or, the resource indication information is used to indicate that the data length of the sensing signal is the data length determined according to the second SCS,
in some embodiments, the determining, by the UE, a CP length in time and/or a data length for transmitting the sensing signal, according to the first SCS and/or the resource indication information, includes:

determining, by the UE, that the CP length in time of the sensing signal is a CP length in time determined according to the second SCS;
and/or,
determining, by the UE, that the data length of the sensing signal is a data length determined according to the second SCS.

In this embodiment, the CP length in time of the sensing signal is greater than the first CP length in time, and the CP length in time of the sensing signal is less than the data length of the sensing signal; where the first CP length in time is a CP length in time determined according to the first SCS.

In some embodiments, the second SCS is X/Y times the first SCS, where X and Y are integers and X<Y.

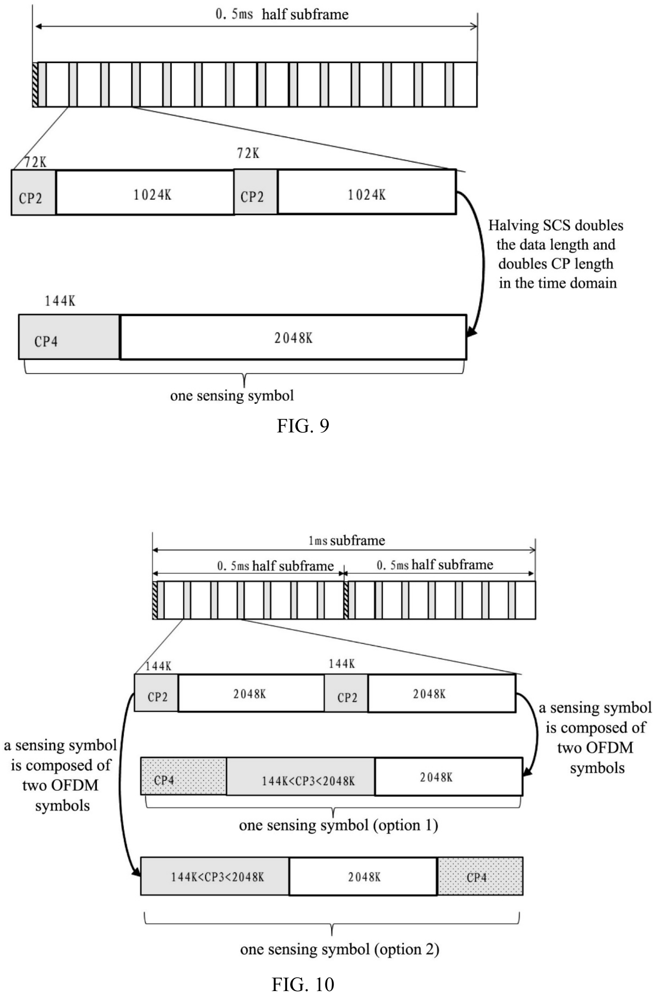

For example, taking the second SCS as 1/2 times of the first SCS as an example, in order to avoid ambiguity in the detection of the sensing signal, the CP length in time of the sensing signal should not exceed the data length of the sensing signal. When the sensing signal is transmitted on an OFDM symbol determined according to the first SCS, in order to ensure that the transmitted sensing signal has a longer CP, as shown in FIG. 9, the CP length in time and/or data length of the sensing signal is determined on an OFDM symbol length $U_{OFDM}=144k \cdot 2^{-\mu} + 2048k \cdot 2^{-\mu}$ determined according to the first SCS as follows (taking $\mu=1$ corresponding to the first SCS as an example):

the data length of the sensing signal is determined by the second SCS, and its data length is twice the data length determined by the first SCS, that is, the data length of the sensing signal is extended from 1024k to 2048K;
the CP length in time of the sensing signal is determined by the second SCS, and its CP length in time is twice the CP length in time determined by the first SCS, that is, the CP length in time of the sensing signal is extended from 72k to 144K (as shown in the CP4 part in FIG. 9).

It is to be noted that when the OFDM symbol length $U_{OFDM}=144k \cdot 2^{-\mu} +16k + 2048k \cdot 2^{-\mu}$ determined according to the first SCS, the method for determining the data length of the sensing signal is similar to the above method, and the CP length in time needs to be increased by 16k.

In this embodiment, when the resource indication information is used to indicate a second SCS used to determine the CP length in time and/or data length of the sensing signal, and the second SCS is X/Y times the first SCS, X and Y are integers, and X<Y, the UE can determine the data length determined according to the second SCS as the data length of the sensing signal, and/or determine the CP length in time determined according to the second SCS as the CP length in time of the sensing signal, and transmit the data part of the sensing signal on the data length, and transmit the cyclic prefix of the data part on the CP length in time.

In some embodiments, the resource indication information is used to indicate that the data length of the sensing signal is a data length determined according to the first SCS;
and/or,

the resource indication information is used to indicate that the CP length in time of the sensing signal is determined by the following formula:

$$U_{CP3} = N * U_{OFDM} - N_u^{scs1} - U_{CP4}$$

where $U_{CP3}$ is a CP length in time of the sensing signal; $U_{OFDM} = N_u^{scs1} + U_{CP1} N_u^{scs1}$ is a data length determined according to the first SCS, $U_{CP1}$ is a CP length in time determined according to the first SCS; $N_u^{scs1}$ is a

data length of the sensing signal; $U_{CP4}$ is greater than or equal to zero.

For example, in case that the resource indication information is used to indicate the number N of OFDM symbols used to determine the CP length in time and/or data length of the sensing signal; or, the resource indication information is used to indicate that the data length of the sensing signal is a data length determined according to the first SCS; and/or, the resource indication information is used to indicate that the CP length in time of the sensing signal is determined by the following formula: $U_{CP3} = N * U_{OFDM} - N_u^{scs1} - U_{CP4}$ in some embodiments, the determining, by the UE, a CP length in time and/or a data length for transmitting the sensing signal, according to the first SCS and/or the resource indication information, includes:

determining, by the UE, that the data length of the sensing signal is a data length determined according to the first SCS; and/or,

determining, by the UE, the CP length in time of the sensing signal through the formula:

$$U_{CP3} = N * U_{OFDM} - N_u^{scs1} - U_{CP4}$$

where $U_{CP3}$ is the CP length in time of the sensing signal; $U_{OFDM} = N_u^{scs1} + U_{CP1}$, $N_u^{scs1}$ is the data length determined according to the first SCS, $U_{CP1}$ is the CP length in time determined according to the first SCS; $N_u^{scs1}$ is the data length of the sensing signal; $U_{CP4}$ is greater than or equal to zero.

In some embodiments, $U_{CP1} < U_{CP3} < N_u^{scs1}$. For example, $U_{CP3}$ can be indicated by the network device or agreed upon by the protocol, and $U_{CP3}$ satisfies the relationship: $U_{CP3} = N * U_{OFDM} - N_u^{scs1} - U_{CP4}$.

In some embodiments, $U_{CP4}$ is configured by a network device or agreed upon by a protocol, and $U_{CP3}$ can be determined by the formula: $U_{CP3} = N * U_{OFDM} - N_u^{scs1} - U_{CP4}$, and $U_{CP1} < U_{CP3} < N_u^{scs2}$.

For example, when the SCS remains unchanged (i.e., the first SCS is used to determine the data length of both the sensing signal and the communication information), taking N=2 as an example, as shown in FIG.10, the CP length in time and/or data length of the sensing signal is determined on the two OFDM symbol lengths as follows (taking $\mu$=0 corresponding to the first SCS as an example):

the data length of the sensing signal is determined by the first SCS, and its data length is 2048K;
the CP length in time of the sensing signal is smaller than the data length of the sensing signal (such as the CP3 part in FIG. 10).

In this embodiment, when the resource indication information is used to indicate the number N of OFDM symbols used to determine the CP length in time and/or data length of the sensing signal, the UE can determine the data length determined according to the first SCS as the data length of the sensing signal, and/or determine a value of the UCP3 determined by the formula $U_{CP3} = N * U_{OFDM} - N_u^{scs1} - U_{CP4}$ as the CP length in time of the sensing signal, and transmit the data part of the sensing signal on the data length, and transmit the cyclic prefix of the data part on the CP length in time.

In some embodiments, no data may be transmitted on the time domain part (i.e., the part may be empty) corresponding to $U_{CP4}$ (the CP4 part as shown in FIG. 10), or a random number may be transmitted, etc., which are not limited in the embodiments of the present disclosure. It is to be noted here that a starting position of the CP4 part may be a starting position of a first OFDM symbol among N OFDM symbols (as shown in option 1 in FIG. 10); or, an ending position of the CP4 part may be an ending position of a last OFDM symbol among N OFDM symbols (as shown in option 2 in FIG. 10); or, the CP4 part includes two parts: a starting position of one part is at a starting position of a first OFDM symbol among N OFDM symbols, and an ending position of the other part is at an ending position of a last OFDM symbol among N OFDM symbols, etc., which are not limited in the embodiments of the present disclosure.

For example, taking a starting position of the CP4 part at a starting position of the first OFDM symbol among N OFDM symbols as an example, the resource indication information can be used to indicate that the data length of the sensing signal is a data length of a last OFDM symbol among N OFDM symbols (for example, N is 2, then the resource indication information can be used to indicate that the data length of the sensing signal is a data length of an OFDM symbol with an even or odd OFDM index), and the resource indication information is used to indicate that the CP length in time of the sensing signal is determined by the following formula: $U_{CP3} = N * U_{OFDM} - N_u^{scs1} - U_{CP4}$ , which are not limited in the embodiments of the present disclosure.

In some embodiments, the resource indication information is used to indicate that the CP length in time of the sensing signal is an ECP length in time determined according to the first SCS;
and/or,
the resource indication information is used to indicate that the data length of the sensing signal is a data length determined according to the first SCS.

For example, in case that the resource indication information is used to indicate that the CP type of the OFDM symbol for transmitting the sensing signal is ECP; or, the resource indication information is used to indicate that the CP length in time of the sensing signal is an ECP length in time determined according to the first SCS; and/or, the resource indication information is used to indicate that the data length of the sensing signal is the data length determined according to the first SCS,
in some embodiments, the determining, by the UE, a CP length in time and/or a data length for transmitting the sensing signal, according to the first SCS and/or the resource indication information, includes:

determining, by the UE, that the CP length in time of the sensing signal is an ECP length in time determined according to the first SCS;
and/or,
determining, by the UE, that the data length of the sensing signal is the data length determined according to the first SCS.

In some embodiments, when the resource indication information is used to indicate that the CP type of the OFDM symbol for transmitting the sensing signal is an extended cyclic prefix ECP, the resource indication information includes but is not limited to at least one of the following:

a second bitmap used to indicate a first time unit in a first radio frame for transmitting a sensing signal; where the first time unit is a half subframe, or the first time unit is a subframe, etc., and the CP type in the first time unit is ECP; for example, the second bitmap may indicate that one or more first time units in the first radio frame are used to transmit a sensing signal, and the CP of the sensing signal adopts ECP; in some embodiments, other time units in the first radio frame may be used to transmit a communication signal, and the CP of the communication signal may adopt NCP; or,
a third bitmap used to indicate a second time unit in the first subframe for transmitting a sensing signal; where the second time unit is a half subframe, and the CP type in the second time unit is ECP; for example, the third bitmap may indicate that one or more second time units in the first subframe are used to transmit a sensing signal, and the CP of the sensing signal adopts ECP; in some embodiments, other time units in the first subframe may be used to transmit a communication signal, and the CP of the communication signal may adopt NCP.

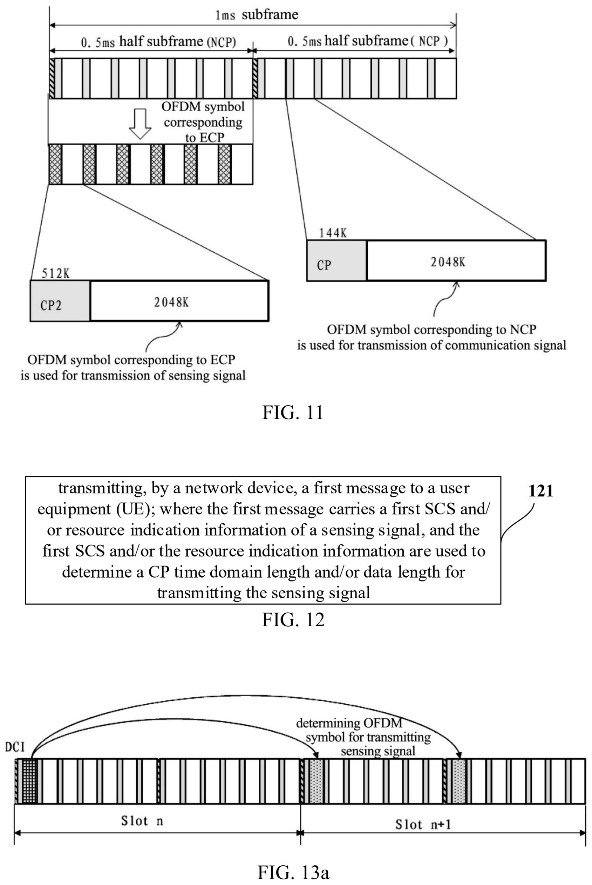

As shown in FIG. 11, a first half of a subframe (i.e., a first 0.5ms duration of a subframe) is used to transmit a sensing signal, and a second half of a subframe (i.e., a second 0.5ms duration of a subframe) is used to send a communication signal. The first half of the subframe uses ECP, the second half of the subframe uses NCP, and the OFDM symbols of the first half of the subframe are allocated to one or more sensing devices for transmitting sensing signals.

In some embodiments, the data part of the sensing signal is obtained by performing a Fourier transform on the sensing signal data, and the CP of the sensing signal is generated by intercepting a segment from the sensing signal, and the specific generation method is similar to the CP generation method of the communication signal.

The terminal involved in the embodiments of the present disclosure may be referred to as a terminal device, which may be a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as user equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

As shown in FIG. 12, one embodiment of the present disclosure provides an information processing method, including the following steps:

Step 121: transmitting, by a network device, a first message to a user equipment (UE); where the first message carries a first SCS and/or resource indication information of a sensing signal, and the first SCS and/or the resource indication information are used to determine a CP length in time and/or data length for transmitting the sensing signal.

Of course, the first SCS and/or resource indication information may also be used to determine the CP length in time and/or data length for receiving the sensing signal.

In some embodiments, the resource indication information is used to indicate at least one of the following:

an OFDM symbol for transmitting the sensing signal includes at least first OFDM symbol of a half subframe;
a second SCS for determining the CP length in time and/or data length of the sensing signal;
the number N of OFDM symbols used to determine the CP length in time and/or data length of the sensing signal; where N is a positive integer;
a CP type of the OFDM symbol for transmitting the sensing signal is ECP.

In some embodiments, the resource indication information is used to indicate that the CP length in time of the sensing signal is a sum of a first CP length in time and a second CP length in time;
and/or,

the resource indication information is used to indicate that the data length of the sensing signal is a data length determined according to the first SCS;
where the first CP length in time is a CP length in time determined according to the first SCS, the second CP length in time is 16k, and k is a constant.

In some embodiments, the resource indication information is used to indicate that the data length of the sensing signal is a data length determined according to the second SCS;
and/or,

the resource indication information is used to indicate that the CP length in time of the sensing signal is determined by the following formula:

$$U_{CP3} = U_{OFDM} - N_u^{scs2} - U_{CP4}$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

In some embodiments, the second SCS is X/Y times the first SCS, where X and Y are integers and X>Y.

In some embodiments, the resource indication information is used to indicate that the CP length in time of the sensing signal is a CP length in time determined according to the second SCS;
and/or,
the resource indication information is used to indicate that the data length of the sensing signal is a data length determined according to the second SCS.

In some embodiments, the second SCS is X/Y times the first SCS, where X and Y are integers and X<Y.

In some embodiments, the resource indication information is used to indicate that the data length of the sensing signal is a data length determined according to the first SCS;
and/or,

the resource indication information is used to indicate that the CP length in time of the sensing signal is determined by the following formula:

$$U_{CP3} = N * U_{OFDM} - N_u^{scs1} - U_{CP4}$$

where $U_{CP3}$ is a CP length in time of the sensing signal; $U_{OFDM} = N_u^{scs1} + U_{CP1}$ $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

In some embodiments, $U_{CP4}$ is configured by a network device or agreed upon by a protocol.

In some embodiments, the resource indication information is used to indicate that the CP length in time of the sensing signal is an ECP length in time determined according to the first SCS;

and/or,

the resource indication information is used to indicate that the data length of the sensing signal is a data length determined according to the first SCS.

In some embodiments, the CP length in time of the sensing signal is smaller than the data length of the sensing signal.

It is to be noted that the above method of the embodiment of the present disclosure and the above information processing method on the UE-side are based on the same application concept, and their embodiments can refer to each other and can achieve the same technical effect, which are not repeated here to avoid repetition.

The network device involved in the embodiment of the present disclosure may be a base station which includes a plurality of cells providing services for the UE. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

The above method of the present disclosure is described hereinafter in conjunction with specific embodiments: Embodiment 1: a sensing symbol is scheduled on a symbol of 0.5 ms of system timing (i.e., an OFDM symbol for transmitting the sensing signal includes at least the first OFDM symbol of a half subframe, that is, a symbol including a 16k cyclic prefix).

When NCP is used, a 1ms radio subframe includes 14 * 2$^\mu$ OFDM symbols, and 1ms includes 2 0.5ms (i.e. half subframes). At each 0.5ms (i.e., symbol 0, symbol 7 * 2$^\mu$), there is a special sample point duration (16k, duration of about 0.52 microseconds), and this duration can extend the CP length in time.

When an SCS of the sensing signal is the same as an SCS of the communication signal (e.g., the SCS of the sensing signal is the same as the SCS of the PDCCH/PDSCH signal), the sensing signal is allocated to the first OFDM symbol of the half subframe, which can effectively extend the CP length in time of the sensing signal.

As shown in FIG. 7, SCS=15kHz, that is, $\mu$=0; constant k=64; a subframe includes 14 symbols. In a subframe of 1ms, the first OFDM symbol at the beginning of the subframe and the OFDM symbol at 0.5ms both have a 16k CP sample point. Compared with the CP on other OFDM symbols, after adding 16k, changes are shown in the following Table 4.

Table 4

| $\mu$ | SCS | CP length in time (us) | CP length in time (us) after adding 6k | length ratio |
|---|---|---|---|---|
| 0 | 15kHz | 4.68 | 5.2 | 111% |
| 1 | 30kHz | 2.34 | 2.86 | 122% |
| 2 | 60kHz | 1.17 | 1.69 | 144% |
| 3 | 120kHz | 0.59 | 1.11 | 188.14% |
| 4 | 240kHz | 0.29 | 0.81 | 279.31% |
| 5 | 480kHz | 0.15 | 0.67 | 446.67% |
| 6 | 960kHz | 0.07 | 0.59 | 842.86% |

It can be seen that when transmitting a sensing signal, choosing to transmit it on the first OFDM symbol of a half subframe can verify the CP of the sensing signal, thereby meeting requirements of the sensing service.

Specifically, when the network device instructs the UE to transmit the sensing signal on the first OFDM symbol of the half subframe, at least one of the following modes may be used.

Mode 1: allocation of radio resources for the sensing signal are based on a set or resource pool allocation method, at least one set or resource pool only includes the first OFDM symbol of the half subframe.

For example, a bitmap is used to represent a sensing resource pool: with a 1ms slot as the unit, the bitmap is 14 * $2^\mu$ bits, which is used to indicate 4 * $2^\mu$ OFDM symbols, where 1 bit is "1" indicating that resources of the OFDM symbol are allocated to the sensing service, and 1 bit is "0" indicating that resources of the OFDM symbol are not allocated to the sensing service. For example:

10000001000000 means that symbol 0 and symbol 7 of a certain radio subframe are allocated to the sensing service.

00000001000000 means that a certain radio subframe symbol 7 is allocated to the sensing service.

Mode 2: when allocation of radio resources for the sensing signal are configured based on a semi-static periodicity, related parameters (period/offset) for indicating resources can indicate only including first OFDM symbol of half a subframe.

For example, when indicating that the sensing signal resource is a periodic resource, the related parameters for indicating resources include:

candidate values of period T are: integer multiples of 0.5 ms, such as {0.5 ms, 1 ms, 5 ms, 10 ms};
period offset T-offset is an integer multiple of 0.5ms, such as {0.5ms, 1ms};
the number of OFDM symbols allocated in each period is 1.

Mode 3: when allocation of radio resources for the sensing signal is triggered based on a UE application, the UE may indicate whether it is necessary to allocate resources that only include the first OFDM symbol of a half subframe.

Mode 4: when allocation of radio resources for the sensing signal is based on a dynamic indication from a network device, the allocated resources only include the first OFDM symbol of a half subframe.

For example, the scheduling signaling DCI for allocating radio resources for the sensing signal includes the following parameters:

16K-CP-Only indication: used to indicate whether the allocated resources include only the first OFDM symbol of the half subframe (i.e., the "16k CP symbol"); for example, 16K-CP-Only is "1" for yes, and 16K-CP-Only is "0" for no;
K0: used to indicate a slot interval from DCI to sensing resources;
S_Start: used to indicate a starting position of the OFDM symbol for transmitting the sensing signal;
if 16K-CP-Only is 0, it means all OFDM symbols counted from a starting position of a slot;
if 16K-CP-Only is 1, it means that only "16k CP symbols" are included from a starting position of a slot;
S_len: used to represent the number of OFDM symbols for transmitting the sensing signal.

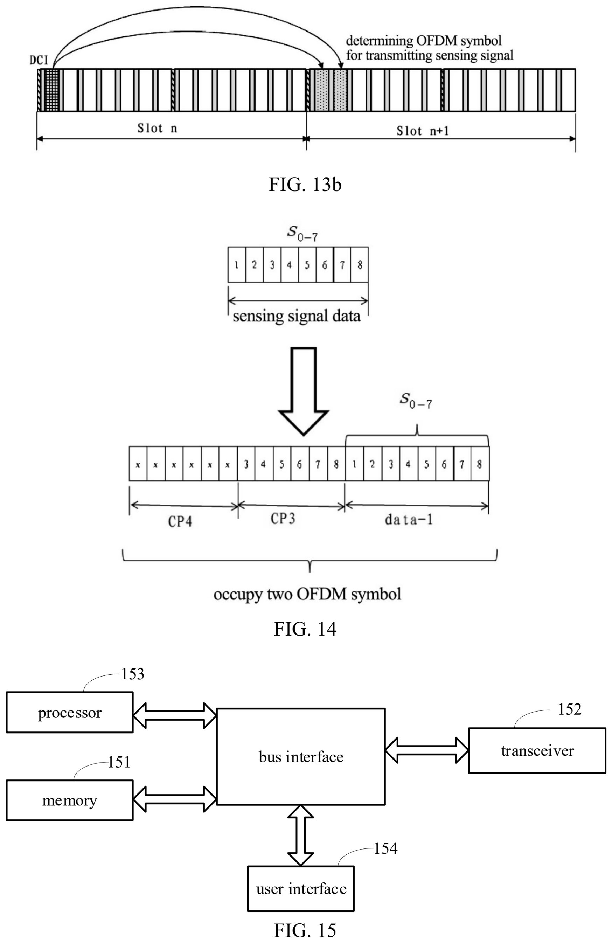

Taking K0=1, start=0, and S_len=2 as an example, as shown in FIG. 13a, it is a schematic diagram of determining an OFDM symbol for transmitting the sensing signal when 16K-CP-Only is 1; as shown in FIG, 13b, it is a schematic diagram of determining an OFDM symbol for transmitting the sensing signal when 16K-CP-Only is 0.

Embodiment 2: when keeping the SCS unchanged, one sensing symbol occupies two OFDM symbols.

When transmitting a sensing signal, the used SCS is the same as an SCS of a communication signal (such as PDCCH/PDSCH), but one sensing symbol occupies 2 OFDM symbols.

As shown in FIG. 10, taking SCS=15kHz, that is, $\mu$=0; constant k=64; and one subframe includes 14 symbols as an example, when the SCS remains unchanged, one sensing symbol occupies two OFDM symbols, where the sensing symbol is composed of three parts:

a data part of the sensing signal having a length of 2048K. The data part of the sensing signal is obtained by performing Fourier transform on the sensing signal;
CP3 part: it is generated by intercepting the data part of the sensing signal; and its length does not exceed the data length of the sensing signal according to the cyclic prefix method;
CP4 part: this part can be empty (i.e., no information is transmitted on this time domain resource), or randomly filled (i.e., transmitting random numbers), etc., which are not limited in the embodiments of the present disclosure.

It is to be noted that CP4 can be placed in front of CP3 (such as option 1 in FIG. 10), or can be placed after the data part of the sensing signal (such as option 2 in FIG. 10), or CP4 can be divided into two parts: one part is placed at a starting position of the sensing symbol, and the other part is placed at an end position of the sensing symbol, etc., which are not limited in the embodiments of the present disclosure.

Taking an output IFFT sequence length as 8, an original frame structure CP2 length as 2, and the data length as 8 (i.e., $S_{0-7}$) as an example, as shown in FIG. 14, with the above scheme, the CP length in time of the sensing signal, that is, the length of CP3 can be configured to be 6. Then the length of CP4 is 6. CP4 can be in a state of not transmitting any data, or transmitting a random value state, or transmitting other predefined data.

It should also be noted that, comparing with a communication symbol, for a sensing symbol, in addition to occupying 2 OFDM symbols, it can also occupy 1.5 OFDM symbols (that is, 2 sensing symbols occupy the length in time of 3 OFDM symbols), or occupy 3 OFDM symbols, etc., which are not limited in the embodiments of the present disclosure.

Embodiment 3: doubling the SCS and halving data length of the sensing symbol.

The SCS of the CP length in time and/or data length of the sensing signal is determined by using twice the SCS of the PDCCH/PDSCH signal. In order to avoid ambiguity in the detection of the sensing signal, the CP length in time of the sensing signal after the SCS is converted should not exceed the data length of the sensing signal. As shown in FIG. 8, taking μ corresponding to the SCS of the PDCCH/PDSCH signal as 0 as an example, the CP length in time and/or data length of the sensing signal is determined as follows:

a total length in time of a sensing symbol remains unchanged, for example, it is still 144K+2048K;

a data length of the sensing signal is reduced by half (e.g., from the original 2048K to 1024K); where the data part of the sensing signal is obtained by performing Fourier transform on the sensing signal.

The CP length in time CP3 of the sensing signal is smaller than the data length of the sensing signal (e.g., the CP3 part is smaller than 1024K); where the CP of the sensing signal is generated by intercepting the data part of the sensing signal, and its length does not exceed the data length of the sensing signal according to the cyclic prefix method.

The other time domain part CP4 does not transmit any data (this part can be empty), or transmit random numbers (i.e., random data filling), etc.

It is to be noted that CP4 can be placed in front of CP3 (such as option 1 in FIG. 8), or can be placed after the data part of the sensing signal (such as option 2 in FIG. 8), or CP4 can be divided into two parts: one part is placed at A starting position of the sensing symbol, and the other part is placed at an end position of the sensing symbol, etc., which are not limited in the embodiments of the present disclosure.

It should also be noted that, comparing with a communication symbol, for a sensing symbol, in addition to doubling the SCS of the communication signal to determine the length of the sensing symbol (i.e., the data length of the sensing signal+CP3+CP4), the SCS of the communication signal can also be expanded by 1.5 times or 4 times or other multiples to determine the length of the sensing symbol, etc., which are not limited in the embodiments of the present disclosure.

For example, for the method of doubling the SCS, one specific implementation method may be: placing comb data on a corresponding radio resource element (RE), such as placing data 0 (or no data) on even-numbered RE resources, and placing the data part of the sensing signal on odd-numbered RE resources; or placing data 0 (or no data) on odd-numbered RE resources, and placing the data part of the sensing signal on even-numbered RE resources, etc., which are not limited in the embodiments of the present disclosure.

Embodiment 4: a resource allocation for a sensing symbol is based on a time unit of 0.5 ms (a half-subframe). The CP type for OFDM symbols within the time unit of 0.5 ms is ECP.

For OFDM symbols used for transmitting communication signals, NCP is used; for OFDM symbols used for transmitting sensing signals, ECP is used. Considering that the starting position of the OFDM symbol corresponding to the ECP and the starting position of the OFDM symbol corresponding to the NCP are aligned within the half subframe of 0.5ms (e.g., for SCS=15kHz, the OFDM symbol 0 corresponding to the NCP and the OFDM symbol corresponding to the ECP are aligned in time, and the OFDM symbol 7 corresponding to the NCP and the OFDM symbol corresponding to the ECP are aligned in time). In the embodiment of the present disclosure, the OFDM symbol used for transmitting sensing signals is taken as a time unit of 0.5ms, and the OFDM symbols within 0.5ms are allocated to one or more sensing devices to transmit sensing symbols.

As shown in FIG. 11, with 0.5ms as the time unit, the OFDM symbols within 0.5ms are allocated to one or more sensing devices to transmit sensing symbols. For example, the OFDM symbols used for transmitting sensing signals within the 0.5ms time unit use ECP; for other time units used for transmitting communication signals, OFDM symbols use NCP. Accordingly, within the 0.5ms time unit, the number of OFDM symbols corresponding to ECP and SCS numerical relationship are shown in the following Table 5.

Table 5

| μ | SCS | the number of OFDM symbols in 0.5ms (ECP) | CP length per OFDM symbol (ECP) | CP length in time per OFDM symbol (NCP) |
|---|---|---|---|---|
| 0 | 15kHz | 6 | 16.64ms | 4.68ms |
| 1 | 30kHz | 12 | 8.32ms | 2.34ms |

(continued)

| μ | SCS | the number of OFDM symbols in 0.5ms (ECP) | CP length per OFDM symbol (ECP) | CP length in time per OFDM symbol (NCP) |
|---|---|---|---|---|
| 2 | 60kHz | 24 | 4.16ms | 1.17ms |
| 3 | 120kHz | 48 | 2.20ms | 0.59ms |
| 4 | 240kHz | 96 | 1.03ms | 0.29ms |
| 5 | 480kHz | 192 | 0.53ms | 0.15ms |
| 6 | 960kHz | 384 | 0.29ms | 0.07ms |

For example, when the network device indicates sensing resources, schedulable resources for transmitting the sensing signal are determined with a time unit of 0.5ms as the minimum granularity; and for a specific UE or other device transmitting the sensing signal, which OFDM symbols corresponding to the ECP are indicated for transmitting the sensing signal. Specifically, the network device indicates the sensing resources in a manner including but not limited to at least one of the following:

Mode 1: the network device uses high-level signaling to configure 0.5ms time units within a 10ms radio frame, in which OFDM symbols use the ECP for the UE to transmit sensing signals. For example, a 20-bit bitmap is used for the indication.

For example, a 20-bit bitmap of 10001000000000000001 means:

in the first 1ms, all OFDM symbols in the first half of the subframe use ECP;
in the third 1ms, all OFDM symbols in the first half of the subframe use ECP;

In the 20th 1ms, all OFDM symbols in the second half of the subframe use ECP.

It is to be noted that the above message can be a cell-level message, that is, a common configuration message; for all UEs, the information they receive is the same.

Mode 2: the network device indicates, within a 0.5ms time unit where OFDM symbols use the ECP, specific OFDM symbols to be used by the UE for transmitting sensing signals. For example, it employs a bitmap for indication (the bit number of which is related to the SCS).

Taking SCS=30kHz as an example, a 12-bit bitmap is required. A 12-bit bitmap such as 111111000000 indicates that, among 12 OFDM symbols corresponding to ECP, the first 6 OFDM symbols are allocated to the UE for transmitting sensing signals.

In the present disclosure, without changing the frame structure, with the above embodiments, the CP length in time of the sensing signal can be can extended to reduce inter-symbol interference, so that the CP length in time for transmitting and/or receiving the sensing signal can meet the needs of the sensing service (such as expanding the sensing range, adapting to complex sensing environments, etc.), thereby improving the availability of sensing services based on the NR system, and solving the problem that the CP length in time cannot meet the needs of the sensing service when the sensing signal is transmitted based on the current OFDM symbol.

The above embodiments introduce the information processing method of the present disclosure. The following embodiments will further illustrate the corresponding device, UE and network in conjunction with the accompanying drawings.

As shown in FIG. 15, one embodiment provides an information processing device, which includes a memory 151, a transceiver 152, and a processor 153. The memory 151 is used to store a computer program. The transceiver 152 is used to send and receive data under the control of the processor 153. For example, the transceiver 152 is used to receive and send data under the control of the processor 153. The processor 153 is used to read the computer program in the memory and perform the following operations:

receiving a first message transmitted by a network device; where the first message carries a first SCS and/or resource indication information of a sensing signal.
determining a CP length in time and/or data length for transmitting the sensing signal according to the first SCS and/or the resource indication information.

In some embodiments, the resource indication information is used to indicate at least one of the following:

an OFDM symbol for transmitting the sensing signal includes at least first OFDM symbol of a half subframe;
a second SCS for determining the CP length in time and/or data length of the sensing signal;

the number N of OFDM symbols used to determine the CP length in time and/or data length of the sensing signal;
where N is a positive integer;
a CP type of the OFDM symbol for transmitting the sensing signal is ECP.

In some embodiments, the resource indication information is used to indicate that the CP length in time of the sensing signal is a sum of the first CP length in time and the second CP length in time;
and/or,

the resource indication information is used to indicate that the data length of the sensing signal is a data length determined according to the first SCS;
where the first CP length in time is a CP length in time determined according to the first SCS, the second CP length in time is 16k, and k is a constant.

In some embodiments, the resource indication information is used to indicate that the data length of the sensing signal is a data length determined according to the second SCS;
and/or,

the resource indication information is used to indicate that the CP length in time of the sensing signal is determined by the following formula:

$$U_{CP3} = U_{OFDM} - N_u^{scs2} - U_{CP4}$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

In some embodiments, the second SCS is X/Y times the first SCS, where X and Y are integers and X>Y.
In some embodiments, the resource indication information is used to indicate that the CP length in time of the sensing signal is a CP length in time determined according to the second SCS;
and/or,
the resource indication information is used to indicate that the data length of the sensing signal is a data length determined according to the second SCS.
In some embodiments, the second SCS is X/Y times the first SCS, where X and Y are integers and X<Y.
In some embodiments, the resource indication information is used to indicate that the data length of the sensing signal is a data length determined according to the first SCS;
and/or,

the resource indication information is used to indicate that the CP length in time of the sensing signal is determined by the following formula:

$$U_{CP3} = N * U_{OFDM} - N_u^{scs1} - U_{CP4}$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

In some embodiments, $U_{CP4}$ is configured by a network device or agreed upon by a protocol.
In some embodiments, the resource indication information is used to indicate that the CP length in time of the sensing signal is an ECP length in time determined according to the first SCS;
and/or,
the resource indication information is used to indicate that the data length of the sensing signal is a data length determined according to the first SCS.

In some embodiments, the processor 153 is used to read the computer program in the memory and perform the following operations:

determining that the CP length in time of the sensing signal is a sum of a first CP length in time and a second CP length in time;
and/or,
determining that the data length of the sensing signal is a data length determined according to the first SCS;
where the first CP length in time is a CP length in time determined according to the first SCS, the second CP length in time is 16k, and k is a constant.

In some embodiments, the processor 153 is used to read the computer program in the memory and perform the following operations:

determining that the data length of the sensing signal is a data length determined according to the second SCS;
and/or,
determining a CP length in time of the sensing signal by the formula:

$$U_{CP3} = U_{OFDM} - N_u^{scs2} - U_{CP4};$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

In some embodiments, the processor 153 is used to read the computer program in the memory and perform the following operations:

determining that the CP length in time of the sensing signal is a CP length in time determined according to the second SCS;
and/or,
determining that the data length of the sensing signal is a data length determined according to the second SCS.

In some embodiments, the processor 153 is used to read the computer program in the memory and perform the following operations:

determining that the data length of the sensing signal is a data length determined according to the first SCS;
and/or,
determining a CP length in time of the sensing signal by the formula:

$$U_{CP3} = N * U_{OFDM} - N_u^{scs1} - U_{CP4}$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

In some embodiments, the processor 153 is used to read the computer program in the memory and perform the following operations:

determining that the CP length in time of the sensing signal is an ECP length in time determined according to the first SCS;
and/or,
determining that the data length of the sensing signal is a data length determined according to the first SCS.

In some embodiments, the CP length in time of the sensing signal is smaller than the data length of the sensing signal.

In FIG. 15, a bus architecture may include any number of interconnected bus and bridge. Specifically, various circuits of one or more processors, which are represented by the processor 153, and one or more memories, which are represented by the memory 151, are linked together. The bus architecture may link various other circuits, such as a peripheral device, voltage regulator and a power management circuit together. These features are well known in this field; therefore, this disclosure does not make further description on these features. The bus interface provides an interface. The transceiver 152 may be multiple elements, including a transmitter and a receiver and provide units, which communicate with other devices on the transmission medium. The transmission medium includes radio channels, wired channels, optical cables, etc. For different UEs, a user interface 154 may be an interface that can be connected to external or internal devices. The connected devices include but are not limited to a small keyboard, a display, a speaker, a microphone, a joystick, etc.

The processor 153 is responsible for managing the bus architecture and the normal processing. The memory 151 may be used to store data used by the processor 153 for performing operations.

In some embodiments, the processor 153 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

It is to be noted here that the above device provided in the embodiment of the present disclosure can implement all the method steps implemented by the above UE-side information processing method embodiment, and can achieve the same technical effect. The parts and beneficial effects of this embodiment that are the same as the method embodiment will not be described in detail here.

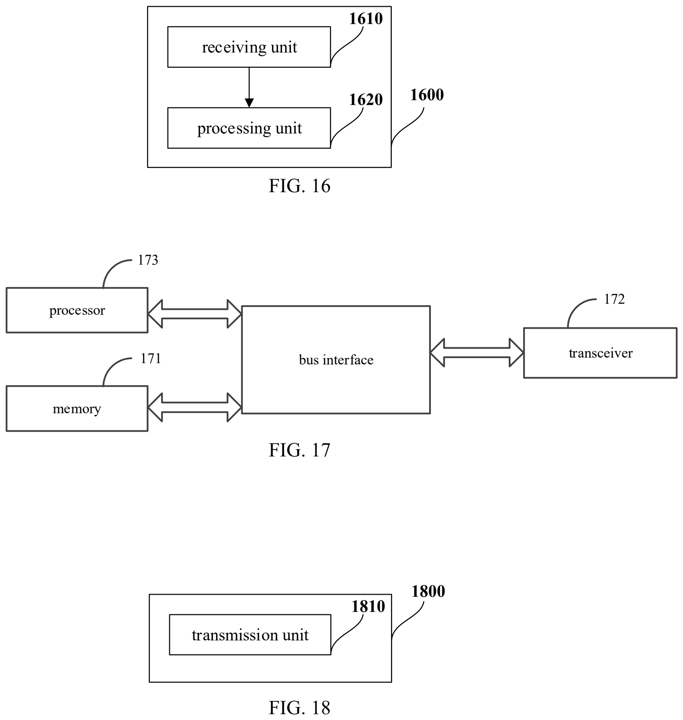

As shown in FIG. 16, one embodiment of the present disclosure further provides a user equipment (UE) 1600, which includes:

a receiving unit 1610 used to receive a first message transmitted by a network device; where the first message carries a first SCS and/or resource indication information of a sensing signal.

a processing unit 1620 used to determine a CP length in time and/or data length for transmitting the sensing signal according to the first SCS and/or the resource indication information.

In some embodiments, the resource indication information is used to indicate at least one of the following:

an OFDM symbol for transmitting the sensing signal includes at least first OFDM symbol of a half subframe;
a second SCS for determining the CP length in time and/or data length of the sensing signal;
the number N of OFDM symbols used to determine the CP length in time and/or data length of the sensing signal; where N is a positive integer;
a CP type of the OFDM symbol for transmitting the sensing signal is ECP.

In some embodiments, the resource indication information is used to indicate that the CP length in time of the sensing signal is a sum of the first CP length in time and the second CP length in time;
and/or,

the resource indication information is used to indicate that the data length of the sensing signal is a data length determined according to the first SCS;
where the first CP length in time is a CP length in time determined according to the first SCS, the second CP length in time is 16k, and k is a constant.

In some embodiments, the resource indication information is used to indicate that the data length of the sensing signal is a data length determined according to the second SCS;
and/or,

the resource indication information is used to indicate that the CP length in time of the sensing signal is determined by the following formula:

$$U_{CP3} = U_{OFDM} - N_u^{scs2} - U_{CP4}$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

In some embodiments, the second SCS is X/Y times the first SCS, where X and Y are integers and X>Y.

In some embodiments, the resource indication information is used to indicate that the CP length in time of the sensing signal is a CP length in time determined according to the second SCS;

and/or,

the resource indication information is used to indicate that the data length of the sensing signal is a data length determined according to the second SCS.

In some embodiments, the second SCS is X/Y times the first SCS, where X and Y are integers and X<Y.

In some embodiments, the resource indication information is used to indicate that the data length of the sensing signal is a data length determined according to the first SCS;

and/or,

the resource indication information is used to indicate that the CP length in time of the sensing signal is determined by the following formula:

$$U_{CP3} = N * U_{OFDM} - N_u^{scs1} - U_{CP4}$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

In some embodiments, $U_{CP4}$ is configured by a network device or agreed upon by a protocol.

In some embodiments, the resource indication information is used to indicate that the CP length in time of the sensing signal is an ECP length in time determined according to the first SCS;

and/or,

the resource indication information is used to indicate that the data length of the sensing signal is a data length determined according to the first SCS.

In some embodiments, the processing unit 1620 is used to:

determine that the CP length in time of the sensing signal is a sum of a first CP length in time and a second CP length in time;

and/or,

determine that the data length of the sensing signal is a data length determined according to the first SCS;

where the first CP length in time is a CP length in time determined according to the first SCS, the second CP length in time is 16k, and k is a constant.

In some embodiments, the processing unit 1620 is used to:

determine that the data length of the sensing signal is a data length determined according to the second SCS;

and/or,

determine a CP length in time of the sensing signal by the formula:

$$U_{CP3} = U_{OFDM} - N_u^{scs2} - U_{CP4};$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

In some embodiments, the processing unit 1620 is used to:

determine that the CP length in time of the sensing signal is a CP length in time determined according to the second SCS;
and/or,
determine that the data length of the sensing signal is a data length determined according to the second SCS.

In some embodiments, the processing unit 1620 is used to:

determine that the data length of the sensing signal is a data length determined according to the first SCS;
and/or,
determine a CP length in time of the sensing signal by the formula:

$$U_{CP3} = N * U_{OFDM} - N_u^{scs1} - U_{CP4}$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

In some embodiments, the processing unit 1620 is used to:

determine that the CP length in time of the sensing signal is an ECP length in time determined according to the first SCS;
and/or,
determine that the data length of the sensing signal is a data length determined according to the first SCS.

In some embodiments, the CP length in time of the sensing signal is smaller than the data length of the sensing signal.

It is to be noted here that the above UE provided in the embodiment of the present disclosure can implement all the method steps implemented by the above UE-side information processing method embodiment, and can achieve the same technical effect. The parts and beneficial effects of this embodiment that are the same as the method embodiment will not be described in detail here.

In order to better achieve the above purpose, as shown in FIG. 17, one embodiment of the present disclosure provides an information processing device, which includes a memory 171, a transceiver 172, and a processor 173. The memory 171 is used to store a computer program. The transceiver 172 is used to send and receive data under the control of the processor 173. For example, the transceiver 172 is used to receive and send data under the control of the processor 173. The processor 173 is used to read the computer program in the memory 171 and perform the following operations:

transmitting a first message to a user equipment (UE); where the first message carries a first SCS and/or resource indication information of a sensing signal, and the first SCS and/or the resource indication information are used to determine a CP length in time and/or data length for transmitting the sensing signal.

In some embodiments, the resource indication information is used to indicate at least one of the following:

an OFDM symbol for transmitting the sensing signal includes at least first OFDM symbol of a half subframe;
a second SCS for determining the CP length in time and/or data length of the sensing signal;
the number N of OFDM symbols used to determine the CP length in time and/or data length of the sensing signal; where N is a positive integer;
a CP type of the OFDM symbol for transmitting the sensing signal is ECP.

In some embodiments, the resource indication information is used to indicate that the CP length in time of the sensing signal is a sum of a first CP length in time and a second CP length in time;
and/or,

the resource indication information is used to indicate that the data length of the sensing signal is a data length determined according to the first SCS;
where the first CP length in time is a CP length in time determined according to the first SCS, the second CP length in time is 16k, and k is a constant.

In some embodiments, the resource indication information is used to indicate that the data length of the sensing signal is a data length determined according to the second SCS;
and/or,

the resource indication information is used to indicate that the CP length in time of the sensing signal is determined by the following formula:

$$U_{CP3} = U_{OFDM} - N_u^{scs2} - U_{CP4}$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

In some embodiments, the second SCS is X/Y times the first SCS, where X and Y are integers and X>Y.
In some embodiments, the resource indication information is used to indicate that the CP length in time of the sensing signal is a CP length in time determined according to the second SCS;
and/or,
the resource indication information is used to indicate that the data length of the sensing signal is a data length determined according to the second SCS.
In some embodiments, the second SCS is X/Y times the first SCS, where X and Y are integers and X<Y.
In some embodiments, the resource indication information is used to indicate that the data length of the sensing signal is a data length determined according to the first SCS;
and/or,

the resource indication information is used to indicate that the CP length in time of the sensing signal is determined by the following formula:

$$U_{CP3} = N * U_{OFDM} - N_u^{scs1} - U_{CP4}$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

In some embodiments, $U_{CP4}$ is configured by a network device or agreed upon by a protocol.
In some embodiments, the resource indication information is used to indicate that the CP length in time of the sensing signal is an ECP length in time determined according to the first SCS;
and/or,
the resource indication information is used to indicate that the data length of the sensing signal is a data length determined according to the first SCS.
In some embodiments, the CP length in time of the sensing signal is smaller than the data length of the sensing signal.
In FIG. 17, a bus architecture may include any number of interconnected bus and bridge. Specifically, various circuits of one or more processors, which are represented by the processor 173, and one or more memories, which are represented by the memory 171, are linked together. The bus architecture may link various other circuits, such as a peripheral device, voltage regulator and a power management circuit together. These features are well known in this field; therefore, this disclosure does not make further description on these features. The bus interface provides an interface. The transceiver 172 may be multiple elements, including a transmitter and a receiver and provide units, which communicate with other devices on the transmission medium. The transmission medium includes radio channels, wired channels, optical cables, etc. The processor 173 is responsible for managing the bus architecture and the normal processing. The memory 171 may be used to store data used by the processor 173 for performing operations.

In some embodiments, the processor 173 may be a central processing unit (CPU), an application specific integrated circuit (ASIC), a field-programmable gate array (FPGA) or a complex programmable logic device (CPLD). The processor may also adopt multi-core architecture.

It is to be noted here that the above device provided in the embodiment of the present disclosure can implement all the method steps implemented by the above network device-side information processing method embodiment, and can achieve the same technical effect. The parts and beneficial effects of this embodiment that are the same as the method embodiment will not be described in detail here.

As shown in FIG. 18, one embodiment of the present disclosure provides a network device 1800, which includes: a transmission unit 1810 used to transmit a first message to a user equipment (UE); where the first message carries a first SCS and/or resource indication information of a sensing signal, and the first SCS and/or the resource indication information are used to determine a CP length in time and/or data length for transmitting the sensing signal.

In some embodiments, the resource indication information is used to indicate at least one of the following:

an OFDM symbol for transmitting the sensing signal includes at least first OFDM symbol of a half subframe;
a second SCS for determining the CP length in time and/or data length of the sensing signal;
the number N of OFDM symbols used to determine the CP length in time and/or data length of the sensing signal;
where N is a positive integer;
a CP type of the OFDM symbol for transmitting the sensing signal is ECP.

In some embodiments, the resource indication information is used to indicate that the CP length in time of the sensing signal is a sum of a first CP length in time and a second CP length in time;
and/or,

the resource indication information is used to indicate that the data length of the sensing signal is a data length determined according to the first SCS;
where the first CP length in time is a CP length in time determined according to the first SCS, the second CP length in time is 16k, and k is a constant.

In some embodiments, the resource indication information is used to indicate that the data length of the sensing signal is a data length determined according to the second SCS;
and/or,

the resource indication information is used to indicate that the CP length in time of the sensing signal is determined by the following formula:

$$U_{CP3} = U_{OFDM} - N_u^{scs2} - U_{CP4}$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

In some embodiments, the second SCS is X/Y times the first SCS, where X and Y are integers and X>Y.

In some embodiments, the resource indication information is used to indicate that the CP length in time of the sensing signal is a CP length in time determined according to the second SCS;
and/or,
the resource indication information is used to indicate that the data length of the sensing signal is a data length determined according to the second SCS.

In some embodiments, the second SCS is X/Y times the first SCS, where X and Y are integers and X<Y.

In some embodiments, the resource indication information is used to indicate that the data length of the sensing signal is a data length determined according to the first SCS;
and/or,

the resource indication information is used to indicate that the CP length in time of the sensing signal is determined by the following formula:

$$U_{CP3} = N * U_{OFDM} - N_u^{scs1} - U_{CP4}$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

In some embodiments, $U_{CP4}$ is configured by a network device or agreed upon by a protocol.

In some embodiments, the resource indication information is used to indicate that the CP length in time of the sensing signal is an ECP length in time determined according to the first SCS;

and/or,

the resource indication information is used to indicate that the data length of the sensing signal is a data length determined according to the first SCS.

In some embodiments, the CP length in time of the sensing signal is smaller than the data length of the sensing signal.

It is to be noted here that the above network device provided in the embodiment of the present disclosure can implement all the method steps implemented by the above network device-side information processing method embodiment, and can achieve the same technical effect. The parts and beneficial effects of this embodiment that are the same as the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure further provides a processor-readable storage medium, which stores a computer program. The computer program is used to cause a processor to execute the above information processing method on the UE side or to cause the processor to execute the above information processing method on the network device side, can achieve the same technical effect. The parts and beneficial effects of this embodiment that are the same as the method embodiment will not be described in detail here.

The processor-readable storage medium can be any available medium or data storage device that can be accessed by the processor, including but not limited to magnetic storage (such as floppy disks, hard disks, magnetic tapes, magneto-optical disks (MO), etc.), optical storage (such as compact disks (CD), digital video disks (DVD), Blu-ray Discs (BD), high-definition versatile disks (HVD), etc.), and semiconductor memory (such as read-only memory (ROM), erasable programmable read-only memory (EPROM), electrically erasable programmable read-only memory (EEPROM), non-volatile memory (NAND FLASH), solid-state disk (Solid State Disk or Solid State Drive, SSD)), etc.

A person skilled in the art should understand that the embodiments of this application may be provided as methods, systems, or computer program products. Therefore, this application may adopt the form of complete hardware embodiments, complete software embodiments, or embodiments combining software and hardware aspects. Moreover, this application may adopt the form of a computer program product implemented on one or more computer available storage media (including but not limited to a disk storage, an optical storage, etc.) containing computer available program code.

This application is described with reference to flowcharts and/or block diagrams of methods, devices (systems), and computer program products according to the embodiments of this application. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present application are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

In addition, it is to be noted that in the device and method of the present disclosure, it is apparent that various components or steps may be decomposed and/or recombined. Such decomposition and/or recombination is regarded as equivalent solutions of the present disclosure. Further, the steps for executing the aforementioned series of processes may naturally be performed in the order described chronologically, but need not necessarily be performed in chronological order. Certain steps may be executed in parallel or independently of one another. Those of ordinary skill in the art will appreciate that all or any of the steps or components of the methods and device of the present disclosure may be implemented in any computing device (including processors, storage media, etc.) or network of computing devices, in the form of hardware, firmware, software, or a combination thereof. This can be achieved by those of ordinary skill in the art by applying their basic programming skills after reading the description of the present disclosure.

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

**Claims**

1. An information processing method, comprising:

   receiving, by a user equipment (UE), a first message transmitted by a network device; wherein the first message carries a first subcarrier spacing (SCS) and/or resource indication information of a sensing signal;
   determining, by the UE, a cyclic prefix (CP) length in time and/or data length for transmitting the sensing signal according to the first SCS and/or the resource indication information.

2. The method according to claim 1, wherein the resource indication information is used to indicate at least one of the following:

   an orthogonal frequency division multiplex (OFDM) symbol for transmitting the sensing signal includes at least first OFDM symbol of a half subframe;
   a second SCS for determining the CP length in time and/or data length of the sensing signal;
   the number N of OFDM symbols used to determine the CP length in time and/or data length of the sensing signal; where N is a positive integer;
   a CP type of the OFDM symbol for transmitting the sensing signal is an extended cyclic prefix (ECP).

3. The method according to claim 1 or 2, wherein the resource indication information is used to indicate that the CP length in time of the sensing signal is a sum of a first CP length in time and a second CP length in time;
   and/or,

   the resource indication information is used to indicate that the data length of the sensing signal is a data length determined according to the first SCS;
   wherein the first CP length in time is a CP length in time determined according to the first SCS, the second CP length in time is 16k, and k is a constant.

4. The method according to claim 1 or 2, wherein the resource indication information is used to indicate that the data length of the sensing signal is a data length determined according to the second SCS;
   and/or,

   the resource indication information is used to indicate that the CP length in time of the sensing signal is determined by the following formula:

   $$U_{CP3} = U_{OFDM} - N_u^{scs2} - U_{CP4},$$

   wherein $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

5. The method according to claim 2 or 4, wherein the second SCS is X/Y times the first SCS, where X and Y are integers and X>Y.

6. The method according to claim 1 or 2, wherein the resource indication information is used to indicate that the CP length in time of the sensing signal is a CP length in time determined according to the second SCS;
   and/or,
   the resource indication information is used to indicate that the data length of the sensing signal is a data length determined according to the second SCS.

7. The method according to claim 2 or 6, wherein the second SCS is X/Y times the first SCS, where X and Y are integers and X<Y.

8. The method according to claim 1 or 2, wherein the resource indication information is used to indicate that the data length of the sensing signal is a data length determined according to the first SCS;
   and/or,

the resource indication information is used to indicate that the CP length in time of the sensing signal is determined by the following formula:

$$U_{CP3} = N * U_{OFDM} - N_u^{scs1} - U_{CP4}$$

wherein $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS;

$N_u^{scs1}$ is a data length of the sensing signal; $U_{CP4}$ is greater than or equal to zero.

9. The method according to claim 4 or 8, wherein $U_{CP4}$ is configured by a network device or agreed upon by a protocol.

10. The method according to claim 1 or 2, wherein the resource indication information is used to indicate that the CP length in time of the sensing signal is an ECP length in time determined according to the first SCS;
and/or,
the resource indication information is used to indicate that the data length of the sensing signal is a data length determined according to the first SCS.

11. The method according to claim 2 or 3, wherein the determining, by the UE, a CP length in time and/or data length for transmitting the sensing signal according to the first SCS and/or the resource indication information, includes:

determining, by the UE, that the CP length in time of the sensing signal is a sum of a first CP length in time and a second CP length in time;
and/or,
determining, by the UE, that the data length of the sensing signal is a data length determined according to the first SCS;
wherein the first CP length in time is a CP length in time determined according to the first SCS, the second CP length in time is 16k, and k is a constant.

12. The method according to claim 2 or 4 or 5, wherein the determining, by the UE, a CP length in time and/or data length for transmitting the sensing signal according to the first SCS and/or the resource indication information, includes:

determining, by the UE, that the data length of the sensing signal is a data length determined according to the second SCS;
and/or,
determining, by the UE, a CP length in time of the sensing signal by the formula:

$$U_{CP3} = U_{OFDM} - N_u^{scs2} - U_{CP4};$$

wherein $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

13. The method according to claim 2 or 6 or 7, wherein the determining, by the UE, a CP length in time and/or data length for transmitting the sensing signal according to the first SCS and/or the resource indication information, includes:

determining, by the UE, that the CP length in time of the sensing signal is a CP length in time determined according to the second SCS;
and/or,
determining, by the UE, that the data length of the sensing signal is a data length determined according to the second SCS.

14. The method according to claim 2 or 8 or 9, wherein the determining, by the UE, a CP length in time and/or data length for transmitting the sensing signal according to the first SCS and/or the resource indication information, includes:

36

determining, by the UE, that the data length of the sensing signal is a data length determined according to the first SCS;

and/or,

determining, by the UE, a CP length in time of the sensing signal by the formula:

$$U_{CP3} = N * U_{OFDM} - N_u^{scs1} - U_{CP4}$$

wherein $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

15. The method according to claim 2 or 10, wherein the determining, by the UE, a CP length in time and/or data length for transmitting the sensing signal according to the first SCS and/or the resource indication information, includes:

determining, by the UE, that the CP length in time of the sensing signal is an ECP length in time determined according to the first SCS;

and/or,

determining, by the UE, that the data length of the sensing signal is a data length determined according to the first SCS.

16. The method according to any one of claims 1 to 15, wherein the CP length in time of the sensing signal is smaller than the data length of the sensing signal.

17. An information processing method, comprising:

transmitting, by a network device, a first message to a user equipment (UE); wherein the first message carries a first SCS and/or resource indication information of a sensing signal, and the first SCS and/or the resource indication information are used to determine a CP length in time and/or data length for transmitting the sensing signal.

18. The method according to claim 17, wherein the resource indication information is used to indicate at least one of the following:

an OFDM symbol for transmitting the sensing signal includes at least first OFDM symbol of a half subframe;

a second SCS for determining the CP length in time and/or data length of the sensing signal;

the number N of OFDM symbols used to determine the CP length in time and/or data length of the sensing signal; where N is a positive integer;

a CP type of the OFDM symbol for transmitting the sensing signal is ECP.

19. The method according to claim 17 or 18, wherein the resource indication information is used to indicate that the CP length in time of the sensing signal is a sum of a first CP length in time and a second CP length in time;

and/or,

the resource indication information is used to indicate that the data length of the sensing signal is a data length determined according to the first SCS;

wherein the first CP length in time is a CP length in time determined according to the first SCS, the second CP length in time is 16k, and k is a constant.

20. The method according to claim 17 or 18, wherein the resource indication information is used to indicate that the data length of the sensing signal is a data length determined according to the second SCS;

and/or,

the resource indication information is used to indicate that the CP length in time of the sensing signal is determined by the following formula:

$$U_{CP3} = U_{OFDM} - N_u^{scs2} - U_{CP4}$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

21. The method according to claim 18 or 20, wherein the second SCS is X/Y times the first SCS, where X and Y are integers and X>Y.

22. The method according to claim 17 or 18, wherein the resource indication information is used to indicate that the CP length in time of the sensing signal is a CP length in time determined according to the second SCS;
and/or,
the resource indication information is used to indicate that the data length of the sensing signal is a data length determined according to the second SCS.

23. The method according to claim 18 or 22, wherein the second SCS is X/Y times the first SCS, where X and Y are integers and X<Y.

24. The method according to claim 17 or 18, wherein the resource indication information is used to indicate that the data length of the sensing signal is a data length determined according to the first SCS;
and/or,

the resource indication information is used to indicate that the CP length in time of the sensing signal is determined by the following formula:

$$U_{CP3} = N * U_{OFDM} - N_u^{scs1} - U_{CP4}$$

wherein $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

25. The method according to claim 20 or 24, wherein $U_{CP4}$ is configured by a network device or agreed upon by a protocol.

26. The method according to claim 17 or 18, wherein the resource indication information is used to indicate that the CP length in time of the sensing signal is an ECP length in time determined according to the first SCS;
and/or,
the resource indication information is used to indicate that the data length of the sensing signal is a data length determined according to the first SCS.

27. The method according to any one of claims 17 to 26, wherein the CP length in time of the sensing signal is smaller than the data length of the sensing signal.

28. An information processing device, comprising: a memory, a transceiver, and a processor;
wherein the memory is used to store a computer program; the transceiver is used to send and receive data under the control of the processor; the processor is used to read the computer program in the memory and perform the following operations:

receiving a first message transmitted by a network device; wherein the first message carries a first SCS and/or resource indication information of a sensing signal;
determining a CP length in time and/or data length for transmitting the sensing signal according to the first SCS and/or the resource indication information.

29. The device according to claim 28, wherein the resource indication information is used to indicate at least one of the following:

an OFDM symbol for transmitting the sensing signal includes at least first OFDM symbol of a half subframe;
a second SCS for determining the CP length in time and/or data length of the sensing signal;

the number N of OFDM symbols used to determine the CP length in time and/or data length of the sensing signal; where N is a positive integer;
a CP type of the OFDM symbol for transmitting the sensing signal is ECP.

30. The device according to claim 28 or 29, wherein the resource indication information is used to indicate that the CP length in time of the sensing signal is a sum of the first CP length in time and the second CP length in time; and/or,

> the resource indication information is used to indicate that the data length of the sensing signal is a data length determined according to the first SCS;
> wherein the first CP length in time is a CP length in time determined according to the first SCS, the second CP length in time is 16k, and k is a constant.

31. The device according to claim 28 or 29, wherein the resource indication information is used to indicate that the data length of the sensing signal is a data length determined according to the second SCS; and/or,

> the resource indication information is used to indicate that the CP length in time of the sensing signal is determined by the following formula:

$$U_{CP3} = U_{OFDM} - N_u^{scs2} - U_{CP4},$$

> where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

32. The device according to claim 29 or 31, wherein the second SCS is X/Y times the first SCS, where X and Y are integers and X>Y.

33. The device according to claim 28 or 29, wherein the resource indication information is used to indicate that the CP length in time of the sensing signal is a CP length in time determined according to the second SCS; and/or,
the resource indication information is used to indicate that the data length of the sensing signal is a data length determined according to the second SCS.

34. The device according to claim 29 or 33, wherein the second SCS is X/Y times the first SCS, where X and Y are integers and X<Y.

35. The device according to claim 28 or 29, wherein the resource indication information is used to indicate that the data length of the sensing signal is a data length determined according to the first SCS; and/or,

> the resource indication information is used to indicate that the CP length in time of the sensing signal is determined by the following formula:

$$U_{CP3} = N * U_{OFDM} - N_u^{scs1} - U_{CP4}$$

> where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

36. The device according to claim 31 or 35, wherein $U_{CP4}$ is configured by a network device or agreed upon by a protocol.

37. The device according to claim 28 or 29, wherein the resource indication information is used to indicate that the CP length in time of the sensing signal is an ECP length in time determined according to the first SCS;

and/or,

the resource indication information is used to indicate that the data length of the sensing signal is a data length determined according to the first SCS.

38. The device according to claim 29 or 30, wherein the processor is used to read the computer program in the memory and perform the following operations:

determining that the CP length in time of the sensing signal is a sum of a first CP length in time and a second CP length in time;

and/or,

determining that the data length of the sensing signal is a data length determined according to the first SCS; wherein the first CP length in time is a CP length in time determined according to the first SCS, the second CP length in time is 16k, and k is a constant.

39. The device according to claim 29 or 31 or 32, wherein the processor is used to read the computer program in the memory and perform the following operations:

determining that the data length of the sensing signal is a data length determined according to the second SCS; and/or,

determining a CP length in time of the sensing signal by the formula:

$$U_{CP3} = U_{OFDM} - N_u^{scs2} - U_{CP4};$$

wherein $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

40. The device according to claim 29 or 33 or 34, wherein the processor is used to read the computer program in the memory and perform the following operations:

determining that the CP length in time of the sensing signal is a CP length in time determined according to the second SCS;

and/or,

determining that the data length of the sensing signal is a data length determined according to the second SCS.

41. The device according to claim 29 or 35 or 36, wherein the processor is used to read the computer program in the memory and perform the following operations:

determining that the data length of the sensing signal is a data length determined according to the first SCS; and/or,

determining a CP length in time of the sensing signal by the formula:

$$U_{CP3} = N * U_{OFDM} - N_u^{scs1} - U_{CP4}$$

wherein $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

42. The device according to claim 29 or 37, wherein the processor is used to read the computer program in the memory and perform the following operations:

determining that the CP length in time of the sensing signal is an ECP length in time determined according to the first SCS;

and/or,
determining that the data length of the sensing signal is a data length determined according to the first SCS.

43. The device according to any one of claims 28 to 42, wherein the CP length in time of the sensing signal is smaller than the data length of the sensing signal.

44. A user equipment (UE), comprising:

a receiving unit used to receive a first message transmitted by a network device; wherein the first message carries a first SCS and/or resource indication information of a sensing signal;
a processing unit used to determine a CP length in time and/or data length for transmitting the sensing signal according to the first SCS and/or the resource indication information.

45. The UE according to claim 44, wherein the resource indication information is used to indicate at least one of the following:

an OFDM symbol for transmitting the sensing signal includes at least first OFDM symbol of a half subframe;
a second SCS for determining the CP length in time and/or data length of the sensing signal;
the number N of OFDM symbols used to determine the CP length in time and/or data length of the sensing signal; where N is a positive integer;
a CP type of the OFDM symbol for transmitting the sensing signal is ECP.

46. The UE according to claim 44 or 45, wherein the resource indication information is used to indicate that the CP length in time of the sensing signal is a sum of the first CP length in time and the second CP length in time;
and/or,

the resource indication information is used to indicate that the data length of the sensing signal is a data length determined according to the first SCS;
wherein the first CP length in time is a CP length in time determined according to the first SCS, the second CP length in time is 16k, and k is a constant.

47. The UE according to claim 44 or 45, wherein the resource indication information is used to indicate that the data length of the sensing signal is a data length determined according to the second SCS;
and/or,

the resource indication information is used to indicate that the CP length in time of the sensing signal is determined by the following formula:

$$U_{CP3} = U_{OFDM} - N_u^{scs2} - U_{CP4},$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

48. The UE according to claim 45 or 47, wherein the second SCS is X/Y times the first SCS, where X and Y are integers and X>Y.

49. The UE according to claim 44 or 45, wherein the resource indication information is used to indicate that the CP length in time of the sensing signal is a CP length in time determined according to the second SCS;
and/or,
the resource indication information is used to indicate that the data length of the sensing signal is a data length determined according to the second SCS.

50. The UE according to claim 45 or 49, wherein the second SCS is X/Y times the first SCS, where X and Y are integers and X<Y.

**51.** The UE according to claim 44 or 45, wherein the resource indication information is used to indicate that the data length of the sensing signal is a data length determined according to the first SCS;
and/or,

the resource indication information is used to indicate that the CP length in time of the sensing signal is determined by the following formula:

$$U_{CP3} = N * U_{OFDM} - N_u^{scs1} - U_{CP4}$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

**52.** The UE according to claim 47 or 51, wherein $U_{CP4}$ is configured by a network device or agreed upon by a protocol.

**53.** The UE according to claim 44 or 45, wherein the resource indication information is used to indicate that the CP length in time of the sensing signal is an ECP length in time determined according to the first SCS;
and/or,
the resource indication information is used to indicate that the data length of the sensing signal is a data length determined according to the first SCS.

**54.** The UE according to claim 45 or 46, wherein the processing unit is used to:

determine that the CP length in time of the sensing signal is a sum of a first CP length in time and a second CP length in time;
and/or,
determine that the data length of the sensing signal is a data length determined according to the first SCS;
wherein the first CP length in time is a CP length in time determined according to the first SCS, the second CP length in time is 16k, and k is a constant.

**55.** The UE according to claim 45 or 47 or 48, wherein the processing unit is used to:

determine that the data length of the sensing signal is a data length determined according to the second SCS;
and/or,
determine a CP length in time of the sensing signal by the formula:

$$U_{CP3} = U_{OFDM} - N_u^{scs2} - U_{CP4};$$

wherein $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

**56.** The UE according to claim 45 or 49 or 50, wherein the processing unit is used to:

determine that the CP length in time of the sensing signal is a CP length in time determined according to the second SCS;
and/or,
determine that the data length of the sensing signal is a data length determined according to the second SCS.

**57.** The UE according to claim 45 or 51 or 52, wherein the processing unit is used to:

determine that the data length of the sensing signal is a data length determined according to the first SCS;
and/or,
determine a CP length in time of the sensing signal by the formula:

$$U_{CP3} = N * U_{OFDM} - N_u^{scs1} - U_{CP4}$$

wherein $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

58. The UE according to claim 44 or 58, wherein the processing unit is used to:

   determine that the CP length in time of the sensing signal is an ECP length in time determined according to the first SCS;
   and/or,
   determine that the data length of the sensing signal is a data length determined according to the first SCS.

59. The UE according to any one of claims 44 to 58, wherein the CP length in time of the sensing signal is smaller than the data length of the sensing signal.

60. An information processing device, comprising: a memory, a transceiver, and a processor;
   wherein the memory is used to store a computer program; the transceiver is used to send and receive data under the control of the processor; the processor is used to read the computer program in the memory and perform the following operations:
   transmitting a first message to a user equipment (UE); wherein the first message carries a first SCS and/or resource indication information of a sensing signal, and the first SCS and/or the resource indication information are used to determine a CP length in time and/or data length for transmitting the sensing signal.

61. The device according to claim 60, wherein the resource indication information is used to indicate at least one of the following:

   an OFDM symbol for transmitting the sensing signal includes at least first OFDM symbol of a half subframe;
   a second SCS for determining the CP length in time and/or data length of the sensing signal;
   the number N of OFDM symbols used to determine the CP length in time and/or data length of the sensing signal; where N is a positive integer;
   a CP type of the OFDM symbol for transmitting the sensing signal is ECP.

62. The device according to claim 60 or 61, wherein the resource indication information is used to indicate that the CP length in time of the sensing signal is a sum of a first CP length in time and a second CP length in time;
   and/or,

   the resource indication information is used to indicate that the data length of the sensing signal is a data length determined according to the first SCS;
   wherein the first CP length in time is a CP length in time determined according to the first SCS, the second CP length in time is 16k, and k is a constant.

63. The device according to claim 60 or 61, wherein the resource indication information is used to indicate that the data length of the sensing signal is a data length determined according to the second SCS;
   and/or,

   the resource indication information is used to indicate that the CP length in time of the sensing signal is determined by the following formula:

$$U_{CP3} = U_{OFDM} - N_u^{scs2} - U_{CP4}$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

64. The device according to claim 60 or 61, wherein the second SCS is X/Y times the first SCS, where X and Y are integers and X>Y.

65. The device according to claim 60 or 61, wherein the resource indication information is used to indicate that the CP length in time of the sensing signal is a CP length in time determined according to the second SCS;
and/or,
the resource indication information is used to indicate that the data length of the sensing signal is a data length determined according to the second SCS.

66. The device according to claim 61 or 65, wherein the second SCS is X/Y times the first SCS, where X and Y are integers and X<Y.

67. The device according to claim 60 or 61, wherein the resource indication information is used to indicate that the data length of the sensing signal is a data length determined according to the first SCS;
and/or,

the resource indication information is used to indicate that the CP length in time of the sensing signal is determined by the following formula:

$$U_{CP3} = N * U_{OFDM} - N_u^{scs1} - U_{CP4}$$

wherein $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

68. The device according to claim 63 or 67, wherein $U_{CP4}$ is configured by a network device or agreed upon by a protocol.

69. The device according to claim 60 or 61, wherein the resource indication information is used to indicate that the CP length in time of the sensing signal is an ECP length in time determined according to the first SCS;
and/or,
the resource indication information is used to indicate that the data length of the sensing signal is a data length determined according to the first SCS.

70. The device according to any one of claims 60 to 69, wherein the CP length in time of the sensing signal is smaller than the data length of the sensing signal.

71. A network device, comprising:
a transmission unit used to transmit a first message to a user equipment (UE); wherein the first message carries a first SCS and/or resource indication information of a sensing signal, and the first SCS and/or the resource indication information are used to determine a CP length in time and/or data length for transmitting the sensing signal.

72. The network device according to claim 71, wherein the resource indication information is used to indicate at least one of the following:

an OFDM symbol for transmitting the sensing signal includes at least first OFDM symbol of a half subframe;
a second SCS for determining the CP length in time and/or data length of the sensing signal;
the number N of OFDM symbols used to determine the CP length in time and/or data length of the sensing signal; where N is a positive integer;
a CP type of the OFDM symbol for transmitting the sensing signal is ECP.

73. The network device according to claim 71 or 72, wherein the resource indication information is used to indicate that the CP length in time of the sensing signal is a sum of a first CP length in time and a second CP length in time;
and/or,

the resource indication information is used to indicate that the data length of the sensing signal is a data length determined according to the first SCS;

wherein the first CP length in time is a CP length in time determined according to the first SCS, the second CP length in time is 16k, and k is a constant.

74. The network device according to claim 71 or 72, wherein the resource indication information is used to indicate that the data length of the sensing signal is a data length determined according to the second SCS; and/or,

the resource indication information is used to indicate that the CP length in time of the sensing signal is determined by the following formula:

$$U_{CP3} = U_{OFDM} - N_u^{scs2} - U_{CP4}$$

where $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs2}$ is a data length of the sensing signal; $U_{CP4}$ is greater than or equal to zero.

75. The network device according to claim 72 or 74, wherein the second SCS is X/Y times the first SCS, where X and Y are integers and X>Y.

76. The network device according to claim 71 or 72, wherein the resource indication information is used to indicate that the CP length in time of the sensing signal is a CP length in time determined according to the second SCS; and/or, the resource indication information is used to indicate that the data length of the sensing signal is a data length determined according to the second SCS.

77. The network device according to claim 72 or 76, wherein the second SCS is X/Y times the first SCS, where X and Y are integers and X<Y.

78. The network device according to claim 72 or 76, wherein the resource indication information is used to indicate that the data length of the sensing signal is a data length determined according to the first SCS; and/or,

the resource indication information is used to indicate that the CP length in time of the sensing signal is determined by the following formula:

$$U_{CP3} = N * U_{OFDM} - N_u^{scs1} - U_{CP4}$$

wherein $U_{CP3}$ is a CP length in time of the sensing signal; $U_{OFDM} = N_u^{scs1} + U_{CP1}$, $N_u^{scs1}$ is a data length determined according to the first SCS, $U_{CP1}$ is a CP length in time determined according to the first SCS; $N_u^{scs1}$ is a data length of the sensing signal; $U_{CP4}$ is greater than or equal to zero.

79. The network device according to claim 74 or 78, wherein $U_{CP4}$ is configured by a network device or agreed upon by a protocol.

80. The network device according to claim 71 or 72, wherein the resource indication information is used to indicate that the CP length in time of the sensing signal is an ECP length in time determined according to the first SCS; and/or, the resource indication information is used to indicate that the data length of the sensing signal is a data length determined according to the first SCS.

81. The network device according to any one of claims 71 to 80, wherein the CP length in time of the sensing signal is smaller than the data length of the sensing signal.

82. A processor-readable storage medium, comprising a computer program stored thereon; wherein the computer program is used to cause a processor to execute steps of the information processing method according to any one of claims 1 to 16, or the computer program is used to cause the processor to execute steps of the information processing method according to any one of claims 17 to 27.

FIG. 1a

FIG. 1b

FIG. 1c

gNB1

sensed
object

gNB2

FIG. 1d

UE

gNB

sensed object

FIG. 1e

UE

gNB

sensed object

FIG. 1f

UE

gN
B

sensed object

FIG. 1g

FIG. 2a

FIG. 2b

FIG. 3

FIG. 4

FIG. 5

receiving, by UE, a first message transmitted by a network device; where the first message carries a first SCS and/or resource indication information of a sensing signal | 61

determining, by the UE, a CP time domain length and/or data length for transmitting the sensing signal according to the first SCS and/or the resource indication information | 62

FIG. 6

1ms subframe

0. 5ms half subframe | 0. 5ms half subframe

0. 5ms first symbol

other symbol

| CP1 | CP2 | |
| 16K | 114K | 2048K |

| CP2 | |
| 114K | 2048K |

allocated for transmission of sensing signal
(high-priority allocation)

not allocated for transmission of sensing signal
(low-priority allocation)

FIG. 7

1ms subframe

0. 5ms half subframe | 0. 5ms half subframe

114K

| CP2 | 2048K |

Doubling
SCS results
in halving
of data length

Doubling
SCS results
in halving
of data length

| CP4 | 72K<CP3<1024K | 1024K |

one sensing symbol (option 1)

| 72K<CP3<1024K | 1024K | CP4 |

one sensing symbol (option 2)

FIG. 8

0. 5ms  half subframe

72K

72K

CP2    1024K    CP2    1024K

Halving SCS doubles
the data length and
doubles CP length
in the time domain

144K

CP4    2048K

one sensing symbol

FIG. 9

1ms subframe

0. 5ms half subframe    0. 5ms half subframe

144K

144K

CP2    2048K    CP2    2048K

a sensing symbol
is composed of
two OFDM
symbols

a sensing symbol
is composed of
two OFDM
symbols

CP4    144K<CP3<2048K    2048K

one sensing symbol (option 1)

144K<CP3<2048K    2048K    CP4

one sensing symbol (option 2)

FIG. 10

FIG. 11

transmitting, by a network device, a first message to a user equipment (UE); where the first message carries a first SCS and/ or resource indication information of a sensing signal, and the first SCS and/or the resource indication information are used to determine a CP time domain length and/or data length for transmitting the sensing signal

121

FIG. 12

FIG. 13a

FIG. 13b

FIG. 14

FIG. 15

FIG. 16

FIG. 17

FIG. 18

## INTERNATIONAL SEARCH REPORT

| International application No. |
| --- |
| **PCT/CN2024/084350** |

| A. | CLASSIFICATION OF SUBJECT MATTER |
| --- | --- |

H04L 27/26(2006.01)i

According to International Patent Classification (IPC) or to both national classification and IPC

| B. | FIELDS SEARCHED |
| --- | --- |

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNTXT, ENTXTC, CNABS, VEN, 3GPP, IEEE, CNKI: 感知, 子载波, 间隔, 循环前缀, 长度, 时域, 干扰, OFDM, SCS, CP, sensing, subcarrier, interval, cyclic prefix, length, time domain, interference

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 115515245 A (HUAWEI TECHNOLOGIES CO., LTD.) 23 December 2022 (2022-12-23) description, paragraphs 61-64, 82 and 89, and abstract | 1-82 |
| Y | CN 112187410 A (GUANGDONG OPPO MOBILE TELECOMMUNICATIONS CORP., LTD.) 05 January 2021 (2021-01-05) description, paragraphs 5-9 and 136-141, and abstract | 1-82 |
| A | CN 114079528 A (HUAWEI TECHNOLOGIES CO., LTD.) 22 February 2022 (2022-02-22) entire document | 1-82 |
| A | CN 115884403 A (ZTE CORP.) 31 March 2023 (2023-03-31) entire document | 1-82 |
| A | US 2020068435 A1 (QUALCOMM INC.) 27 February 2020 (2020-02-27) entire document | 1-82 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 April 2024** | **24 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/084350** |

| Patent document cited in search report | | | Publication date (day/month/year) | Patent family member(s) | | | Publication date (day/month/year) |
| --- | --- | --- | --- | --- | --- | --- | --- |
| CN | 115515245 | A | 23 December 2022 | None | | | |
| CN | 112187410 | A | 05 January 2021 | None | | | |
| CN | 114079528 | A | 22 February 2022 | None | | | |
| CN | 115884403 | A | 31 March 2023 | None | | | |
| US | 2020068435 | A1 | 27 February 2020 | WO | 2020040906 | A1 | 27 February 2020 |
| | | | | US | 11153781 | B2 | 19 October 2021 |

Form PCT/ISA/210 (patent family annex) (July 2022)

**EP 4 727 074 A1**

## REFERENCES CITED IN THE DESCRIPTION

**Patent documents cited in the description**

- CN 202310665412